(19) Europäisches Patentamt / European Patent Office / Office européen des brevets

(11) **EP 4 742 172 A1**

(12) **EUROPEAN PATENT APPLICATION**
published in accordance with Art. 153(4) EPC

(43) Date of publication:
**13.05.2026 Bulletin 2026/20**

(21) Application number: **24867107.5**

(22) Date of filing: **30.07.2024**

(51) International Patent Classification (IPC):
**G06T 19/00** (2011.01)    **G06T 19/20** (2011.01)

(52) Cooperative Patent Classification (CPC):
**G06T 15/04; G06T 19/20;** G06T 2200/24;
G06T 2219/2004; G06T 2219/2012

(86) International application number:
**PCT/CN2024/108401**

(87) International publication number:
**WO 2025/060690 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 CN 202311243715**

(71) Applicant: **Tencent Technology (Shenzhen)
Company Limited
Shenzhen, Guangdong 518057 (CN)**

(72) Inventor: **LUO, Keyang
Shenzhen, Guangdong 518057 (CN)**

(74) Representative: **Nederlandsch Octrooibureau
P.O. Box 29720
2502 LS The Hague (NL)**

(54) **OBJECT MAP GENERATION METHOD AND APPARATUS, AND DEVICE,
COMPUTER-READABLE STORAGE MEDIUM AND COMPUTER PROGRAM PRODUCT**

(57)    Provided in the present application are an object map generation method and apparatus, and a device, a computer-readable storage medium and a computer program product The method comprises: acquiring a plurality of initial object maps of a virtual object, and adjustment description text used for describing a preset adjustment effect on the virtual object; controlling a virtual camera to photograph the virtual object from a plurality of different photographing angles, so as to obtain captured images respectively corresponding to the photographing angles; on the basis of the adjustment description text, performing image adjustment on each captured image, so as to obtain a reference image corresponding to each captured image, wherein the reference image meets the preset adjustment effect; selecting from among reference images a target reference image corresponding to each initial object map, wherein the virtual camera can capture the corresponding initial object map at the photographing angle corresponding to the target reference image; and on the basis of the target reference image and the initial object map, generating a target object map which meets the preset adjustment effect.

FIG. 3

- Obtain a plurality of initial object maps of a virtual object, and obtain adjustment description text for describing a preset adjustment effect on the virtual object — 101
- Control a virtual camera to capture the virtual object at a plurality of different capturing angles, to obtain captured images respectively corresponding to the capturing angles — 102
- Respectively perform image adjustment on the captured images based on the adjustment description text, to obtain reference images corresponding to the captured images — 103
- Select, from the reference images, target reference images respectively corresponding to the initial object maps — 104
- Generate, based on the target reference images and the initial object maps, target object maps satisfying the preset adjustment effect — 105

**Description**

RELATED APPLICATION

This application claims priority to Chinese Patent Application No. 2023112437155, filed on September 22, 2023, which is incorporated herein by reference in its entirety.

FIELD OF THE TECHNOLOGY

This application relates to the field of computer technologies, and in particular, to an object map generation method and apparatus, a device, a computer-readable storage medium, and a computer program product.

BACKGROUND OF THE DISCLOSURE

In recent years, with the development of computer technology, industries such as games, films and television, and virtual reality have a trend of vigorous development. A virtual object, a virtual light source, and a virtual camera are arranged in a virtual scene. The virtual object is images of various persons and items that may perform interaction in the virtual scene, or movable objects in the virtual scene. The virtual object includes an object skeleton and an object map. The object map is attached to the object skeleton, to form the virtual object in the virtual scene.

In the related art, to adjust an appearance of the virtual object, an initial object map of the virtual object usually needs to be manually adjusted to generate an adjusted object map. Since there is a large number of object maps for the virtual object, object map generation efficiency is very low.

SUMMARY

Embodiments of this application provide an object map generation method and apparatus, an electronic device, a computer-readable storage medium, and a computer program product, which can effectively improve object map generation efficiency.

Technical solutions of the embodiments of this application are implemented as follows:

An embodiment of this application provides an object map generation method, including:

  obtaining a plurality of initial object maps of a virtual object and adjustment description text for describing a preset adjustment effect on the virtual object, the initial object maps being minimum units of surface maps that constitute the virtual object;

  controlling a virtual camera to capture the virtual object at a plurality of different capturing angles, to obtain captured images respectively corresponding to the capturing angles;

  respectively performing image adjustment on the captured images based on the adjustment description text, to obtain reference images satisfying the preset adjustment effect;

  selecting, from the reference images, target reference images respectively corresponding to the initial object maps, the virtual camera being capable of obtaining the corresponding initial object maps at the capturing angles corresponding to the target reference images; and

  generating, based on the target reference images and the initial object maps, target object maps satisfying the preset adjustment effect.

An embodiment of this application provides an object map generation apparatus, including:

  an obtaining module, configured to: obtain a plurality of initial object maps of a virtual object and adjustment description text for describing a preset adjustment effect on the virtual object, the initial object maps being minimum units of surface maps that constitute the virtual object;

  a capturing module, configured to obtain a plurality of initial object maps of a virtual object and adjustment description text for describing a preset adjustment effect on the virtual object, the initial object maps being minimum units of surface maps that constitute the virtual object;

an adjustment module, configured to respectively perform image adjustment on the captured images based on the adjustment description text, to obtain reference images satisfying the preset adjustment effect;

a selection module, configured to select, from the reference images, target reference images respectively corresponding to the initial object maps, the virtual camera being capable of obtaining the corresponding initial object maps at the capturing angles corresponding to the target reference images; and

a generation module, configured to generate, based on the target reference images and the initial object maps, target object maps satisfying the preset adjustment effect.

In the above solution, the adjustment module is further configured to: invoke an encoding layer and perform image content encoding on the captured images based on the adjustment description text, to obtain image features respectively corresponding to the captured images; and invoke a decoding layer and perform image content adjustment on the captured images based on the image features, to obtain the candidate images respectively corresponding to the captured images.

In the above solution, the generation module is further configured to respectively replace the initial object maps on the virtual object with the corresponding target object maps, to obtain a target virtual object, the target virtual object satisfying the preset adjustment effect.

In the above solution, the above obtaining module is further configured to generate, in response to an editing operation on the adjustment description text, the adjustment description text for describing the preset adjustment effect on the virtual object.

An embodiment of this application provides an electronic device, including:

a memory, configured to store a computer-executable instruction or a computer program; and

a processor, configured to implement, when executing the computer-executable instruction or the computer program stored in the memory, the object map generation method provided by the embodiments of the present disclosure.

An embodiment of this application further provides a computer-readable storage medium, having a computer-executable instruction stored therein, the computer-executable instruction, when executed by a processor, implements the object map generation method provided by the embodiments of this application.

An embodiment of this application provides a computer program product. The computer program product includes a computer program or a computer-executable instruction. The computer program or computer-executable instruction is stored in a computer-readable storage medium. A processor of an electronic device reads the computer-executable instruction from the computer-readable storage medium, and the processor executes the computer-executable instruction, to cause the electronic device to perform the above object map generation method according to the embodiments of this application.

The embodiments of this application have the following beneficial effects:

A plurality of initial object maps of a virtual object and adjustment description text are obtained; a virtual camera is controlled to capture the virtual object at a plurality of different capturing angles, to obtain captured images respectively corresponding to the capturing angles; image adjustment is respectively performed on the captured images based on the adjustment description text, to obtain reference images corresponding to the captured images; target reference images respectively corresponding to the initial object maps are selected from the reference images; and target maps satisfying the preset adjustment effect are generated based on the target reference images and the initial object maps. In this way, since there is at least one initial object map of the virtual object that is acquired from the captured images that are obtained by capturing the virtual object and respectively correspond to the capturing angles, the image adjustment is respectively performed on the captured images, and the obtained reference images can implement the content adjustment on the at least one initial object map corresponding to the captured images. The at least one initial object map can be adjusted based on the reference image corresponding to each initial object map, namely, the target map generated based on each target reference image. Therefore, the image adjustment does not need to be performed on each initial object map, but only needs to be respectively performed on the captured images. In this way, all initial object maps can be adjusted, thereby effectively reducing a number of times of image adjustment. Meanwhile, the generated target object maps can satisfy the preset adjustment effect, thereby effectively improving object map generation efficiency.

BRIEF DESCRIPTION OF THE DRAWINGS

FIG. 1 is a schematic diagram of an architecture of an object map generation system provided by an embodiment of this application.

FIG. 2 is a schematic structural diagram of an electronic device for generating an object map provided by an embodiment of this application.

FIG. 3 is a flowchart I of an object map generation method provided by an embodiment of this application.

FIG. 4 is a flowchart II of an object map generation method provided by an embodiment of this application.

FIG. 5 is a flowchart III of an object map generation method provided by an embodiment of this application.

FIG. 6 is a flowchart IV of an object map generation method provided by an embodiment of this application.

FIG. 7 is a flowchart V of an object map generation method provided by an embodiment of this application.

FIG. 8 is a schematic diagram I of a principle of an object map generation method provided by an embodiment of this application.

FIG. 9 is a schematic diagram II of a principle of an object map generation method provided by an embodiment of this application.

FIG. 10 is a schematic diagram of a principle of an undirected graph provided by an embodiment of this application.

FIG. 11 is a schematic structural diagram of an image adjustment network provided by an embodiment of this application.

DESCRIPTION OF EMBODIMENTS

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.
In the following descriptions, related "some embodiments" describe a subset of all possible embodiments. However, the "some embodiments" may be the same subset or different subsets of all the possible embodiments, and may be combined with each other without conflict.
The terms, involved in the following description, "first/second/ third" are merely intended to distinguish similar objects rather than describing specific orders. "First/second/ third" is interchangeable in proper circumstances to enable the embodiments of this application to be implemented in other orders than those illustrated or described herein.
Unless otherwise defined, all technical and scientific terms used herein have the same meaning as those commonly understood by a person skilled in the art to which the present disclosure belongs. Terms used herein are merely intended to describe objectives of the embodiments of this application, but are not intended to limit this application.
Before the embodiments of this application are further described in detail, a description is made on nouns and terms in the embodiments of this application, and the nouns and terms in the embodiments of this application are applicable to the following explanations.

1) A virtual scene is displayed or provided when an application program is run on a terminal. The virtual scene may be a simulated environment of a real world, or may be a semi-simulated semi-fictional virtual environment, or may be an entirely fictional virtual environment. The virtual scene may be any one of a two-dimensional virtual scene, a 2.5-dimensional virtual scene, or a three-dimensional virtual scene, and the dimension of the virtual scene is not limited in the embodiments of this application. For example, the virtual scene may include a sky, a land, an ocean, and the like. The land includes environmental elements such as a desert and a city. A user can control a virtual object to move in the virtual scene.

2) Artificial intelligence (AI) is a theory, method, technology, and application system that uses a digital computer or a machine controlled by the digital computer to simulate, extend, and expand human intelligence, perceive an environment, acquire knowledge, and use knowledge to obtain an optimal result. The AI technology is a comprehensive discipline, and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration.

3) A virtual object is a moving or static object in a virtual scene. A moving virtual object includes an animal, a vehicle, a person, and the like in the virtual scene. A static virtual object includes a wall, a stone, a ground, and the like in the virtual scene.

4) A virtual camera is a "camera" built in computer animation software or a virtual engine. A function of the virtual camera for representing a viewpoint during animation production is equivalent to a camera in a conventional sense. An object captured by the virtual camera is completely different from an object captured by a physical camera, but functions of the cameras are quite similar. The physical camera captures a real person or an actually established scene. The virtual camera captures a model established in three-dimensional software, and can implement infinite possibilities. The virtual camera is presented in the virtual engine in a form of an icon, and also has parameters such as a lens, a focal length, a focus, an aperture, and a depth of field. The virtual camera can implement camera actions such as "pushing, pulling, shaking, moving, following, throwing, rising, lowering, and comprehensive movement", and can implement capturing effects that are difficult or even impossible to be implemented by the physical camera, for example, penetrating through a wall, passing through a key hole, passing through an object. To-be-adjusted parameters of the physical camera are distributed on a camera body of the physical camera and need to be manually operated. A camera parameter of the virtual camera is a button or a value input bar integrated in a panel. An operator only needs to enter a parameter or drag a mouse. Sometimes, a motion path of the virtual camera may be determined by using only several key frames. During actual capturing, the physical camera usually needs to have a stabilizer or a motion control system. However, even in this case, a picture still shakes.

5) A virtual engine refers to core components of some editable computer virtual systems or some interactive real-time image applications that have been written. These systems provide various tools required for writing a virtual scene for a designer of the virtual scene, and aim at enabling the designer to easily and quickly write a program. The virtual engines include a rendering engine (the rendering engine includes a two-dimensional rendering engine and a three-dimensional rendering engine), a physical engine, a collision detection engine, a sound effect engine, a script engine, an animation engine, an artificial intelligence engine, a network engine, a scene management engine, and the like.

6) A computer vision (CV) technology is a science that studies how to use a machine to "see", and the computer vision further refers to use a camera and a computer instead of human eyes to implement machine vision, such as recognition and measurement of a target, and further perform graphic processing, so that the computer processes the target into an image more suitable for human eyes to observe, or an image transmitted to an instrument for detection. As a scientific discipline, CV studies are related to theories and technologies and attempt to establish an AI system that can obtain information from images or multidimensional data. The CV technology generally includes technologies such as image processing, image recognition, image semantic understanding, image retrieval, optical character recognition (OCR), video processing, video semantic understanding, video content/behavior recognition, three-dimensional object reconstruction, 3D technology, virtual reality, augmented reality, and simultaneous localization and mapping, and further includes common biometric recognition technologies such as face recognition and fingerprint recognition. In a real-time global illumination rendering method of this application, image processing is performed on a virtual scene based on a CV technology, thereby effectively improving illumination rendering efficiency and an illumination rendering effect in the virtual scene.

7) A virtual object represents images of various persons and items that can perform interaction in a virtual scene, or a movable object in the virtual scene. The movable object may be a virtual person, a virtual animal, an animation person, or the like, such as a person, an animal, a plant, an oil drum, a wall, or a stone that are displayed in the virtual scene. The virtual object may be a virtual image for representing a user in the virtual scene. The virtual scene may include a plurality of virtual objects, and each virtual object has a shape and a volume in the virtual scene, and occupies a partial space in the virtual scene. In some embodiments, the virtual object may be a user character controlled by an operation on a client, may be AI set in virtual scene fighting through training, or may be a non-player character (NPC) set in virtual scene interaction. In some embodiments, the virtual object may be a virtual person performing adversarial interaction in the virtual scene. In some embodiments, a quantity of virtual objects participating in interaction in the virtual scene may be set in advance, or may be dynamically determined based on a quantity of clients participating in the interaction.

8) A convolutional neural network (CNN) is a type of feedforward neural network (FNN) including convolutional computation and having a deep structure, and is one of the representative algorithms of deep learning. The CNN has a representation learning capability, and can perform shift-invariant classification on an input image according to a hierarchical structure thereof.

9) Primitives are also referred to as rendering primitives, which are configured for describing graphic data of various graphic elements in a graphic rendering development interface and correspond to entities that can be seen on a drawing interface. The primitives include geometric information required by rendering, which may be vertex data, line segments, polygons, or the like. A primitive at least includes one vertex. A vertex defines a point in a 2-dimensional (2D) or 3-dimensional (3D) coordinate system, and also defines a plurality of attributes that can affect how to render the vertex onto a screen.

In an implementation process of the embodiments of this application, the applicant finds that the related art has the following problems:
In the related art, to adjust an appearance of the virtual object, an initial object map of the virtual object usually needs to be manually adjusted to generate an adjusted object map. Since there is a large number of object maps for the virtual object, object map generation efficiency is very low.
The embodiments of this application provide an object map generation method and apparatus, an electronic device, a non-transitory computer-readable storage medium, and a computer program product, which can effectively improve object map generation efficiency. The following describes an exemplary application of an object map generation system provided by an embodiment of this application.

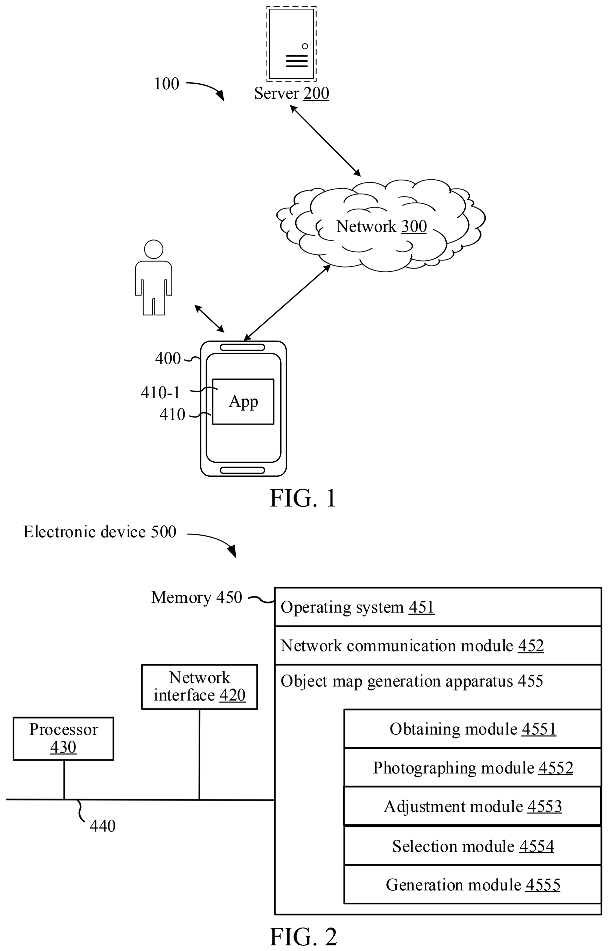

FIG. 1 is a schematic diagram of an architecture of an object map generation system 100 provided by an embodiment of this application. A terminal (a terminal 400 is exemplarily shown) is connected to a server 200 through a network 300. The network 300 may be a wide area network or a local area network or a combination of a wide area network or the local area network.
The terminal 400 is configured to: allow a user to use a client 410, and display a target object map on a graphic interface 410-1 (exemplarily, a graphic interface 410-1 is shown). The terminal 400 and the server 200 are connected to each other by a wired or wireless network.
In some embodiments, the server 200 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The terminal 400 may be a smartphone, a tablet computer, a notebook computer, a desktop computer, a smart speaker, a smart television, a smartwatch, an in-vehicle terminal, or the like, but is not limited thereto. The electronic device provided by this embodiment of this application may be implemented as a terminal, or may be implemented as a server. The terminal and the server may be connected directly or indirectly to the server in a wired or wireless communication protocol. This is not limited in the embodiments of this application.
In some embodiments, the server 200 obtains a plurality of initial object maps of a virtual object and adjustment description text, determines captured images respectively corresponding to capturing angles, and transmits the captured images to the terminal 400. The terminal 400 selects, from reference images, target reference images respectively corresponding to the initial object maps, and generates, based on the target reference images and the initial object maps, target maps satisfying a preset adjustment effect.
In some other embodiments, the server 200 obtains a plurality of initial object maps of a virtual object and adjustment description text, determines captured images respectively corresponding to capturing angles, and selects, from reference images, target reference images respectively corresponding to the initial object maps, generates, based on the target reference image and the initial object maps, target maps satisfying a preset adjustment effect, and transmits the target maps to the terminal 400.
FIG. 2 is a schematic structural diagram of an electronic device 500 for generating an object map provided by an embodiment of this application. The electronic device 500 shown in FIG. 2 may be the server 200 or the terminal 400 shown in FIG. 1. The electronic device 500 shown in FIG. 2 includes at least one processor 430, a memory 450, and at least one network interface 420. Components in the electronic device 500 are coupled together through a bus system 440. The bus system 440 is configured to implement connection and communication between these components. In addition to a data bus, the bus system 440 further includes a power bus, a control bus, and a state signal bus. However, for clarity of description, all types of buses in FIG. 2 are marked as the bus system 440.
The processor 430 may be an integrated circuit chip having a signal processing capability, for example, a general purpose processor, a digital signal processor (DSP), another programmable logic device, discrete gate or transistor logic device, or discrete hardware component, or the like. The general purpose processor may be a microprocessor or any conventional processor, or the like.
The memory 450 may be removable, non-removable, or a combination thereof. An exemplary hardware device includes a solid-state memory, a hard disk drive, an optical disk drive, and the like. The memory 450 alternatively includes one or more storage devices away from the processor 430 in physical positions.

The memory 450 includes a volatile memory or a non-volatile memory, or may include both a volatile memory and a non-volatile memory. The non-volatile memory may be a read only memory (ROM), and the volatile memory may be a random access memory (RAM). The memory 450 described in this embodiment of this application is to include any other suitable type of memories.

In some embodiments, the memory 450 may store data to support various operations. Examples of the data include a program, a module, and a data structure or other subsets or supersets, which are exemplified below.

An operating system 451 includes a system program configured to process various basic system services and performing hardware-related tasks, for example, a framework layer, a core library layer, a drive layer, and the like, to implement various basic services and process hardware-based tasks.

A network communication module 452 is configured to reach another electronic device through one or more (wired or wireless) network interfaces 420. An exemplary network interface 420 includes Bluetooth, wireless fidelity (Wi-Fi), a universal serial bus (USB), and the like.

In some embodiments, an object map generation apparatus provided by this embodiment of this application may be implemented in a software manner. FIG. 2 shows an object map generation apparatus 455 stored in the memory 450. The apparatus may be software in a form of a program, a plug-in, and the like, and includes the following software modules: an obtaining module 4551, a capturing module 4552, an adjustment module 4553, a selection module 4554, and a generation module 4555. These modules are logical and may be arbitrarily combined or further split based on functions implemented. The functions of the modules are described below.

In some other embodiments, the object map generation apparatus provided by this embodiment of this application may be implemented in a hardware manner. As an example, the object map generation apparatus provided by this embodiment of this application may be a processor in a form of a hardware decoding processor, and is programmed to implement an object map generation method provided by an embodiment of this application. For example, the processor in the form of the hardware decoding processor may use one or more application-specific integrated circuits (ASICs), a DSP, a programmable logic device (PLD), a complex programmable logic device (CPLD), a field-programmable gate array (FPGA), or other electronic elements.

In some embodiments, the terminal or the server may implement the object map generation method provided by an embodiment of this application by executing a computer program or a computer-executable instruction. For example, the computer program may be a native program (e.g. a dedicated map generation program) or a software module in an operating system, for example, a map generation module that may be embedded in any program (e.g. an instant messaging client, an album program, an electronic map client, or a navigation client), or may be a native application (APP), i.e. a program that needs to be installed in the operating system for running. In conclusion, the above computer program may be any form of APP, module, or plug-in.

The object map generation method provided by an embodiment of this application is described with reference to exemplary applications and implementations of the server or the terminal provided by this embodiment of this application.

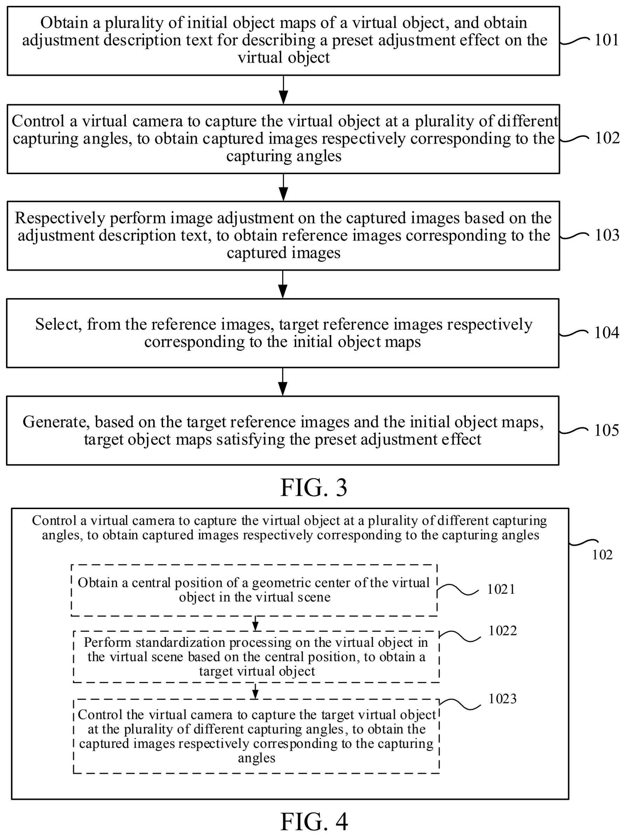

FIG. 3 is a schematic flowchart I of an object map generation method provided by an embodiment of this application. Descriptions are made with reference to operation 101 to operation 105 shown in FIG. 3. The object map generation method provided by this embodiment of this application may be implemented by a server or a terminal alone, or may be implemented by a server and a terminal cooperatively. The following describes an example in which the method is implemented by the server alone.

In operation 101, a plurality of initial object maps of a virtual object are obtained, and adjustment description text for describing a preset adjustment effect on the virtual object is obtained.

In some embodiments, the initial object maps are minimum units of surface maps that constitute the virtual object (i.e., the surface map consists of the plurality of initial object maps).

In some embodiments, the virtual object is an image of various persons and items that can perform interaction in a virtual scene, or a movable object in the virtual scene. The movable object may be a virtual person, a virtual animal, an animation person, or the like, such as a person, an animal, a plant, an oil drum, a wall, or a stone that are displayed in the virtual scene. The virtual object may be a virtual image for representing a user in the virtual scene. The virtual scene may include a plurality of virtual objects, and each virtual object has a shape and a volume in the virtual scene, and occupies a partial space in the virtual scene. In some embodiments, the virtual object may be a user character controlled by an operation on a client, may be AI set in virtual scene fighting through training, or may be a non-player character (NPC) set in virtual scene interaction. In some embodiments, the virtual object may be a virtual person performing adversarial interaction in the virtual scene. In some embodiments, a quantity of virtual objects participating in interaction in the virtual scene may be set in advance, or may be dynamically determined based on a quantity of clients participating in the interaction.

In some embodiments, an object map is also referred to as a rendering primitive, which is configured for describing graphic data of various graphic elements in a graphic rendering development interface and correspond to entities that can be seen on a drawing interface. The primitives include geometric information required by rendering, which may be vertex data, line segments, polygons, or the like. A primitive at least includes one vertex. A vertex defines a point in a 2D or 3D coordinate system, and also defines a plurality of attributes that can affect how to render the vertex onto a screen.

In some embodiments, the adjustment description text is configured for describing the preset adjustment effect on the virtual object, namely, for describing the preset adjustment effect on the initial object maps of the virtual object. The adjustment description text plays an important role in a process of adjusting the virtual object, and is configured for describing the preset adjustment effect on the virtual object. In context of the virtual object, texturing refers to a process of mapping a texture or a pattern to a surface of the object, and the adjustment description text is configured for describing a preset adjustment effect on this map, for example, changing a position of the map, scaling the texture, rotating the map, or replacing the map with different textures.

For example, the adjustment description text may be configured for adjusting a map. The adjustment description text may describe a specific operation of adjusting the map, for example, "Move a horizontal position of map A to the right by 10 units" and "Increase the brightness of map B by 20%". The adjustment description text may be configured for adjusting an attribute of a map. The adjustment description text may alternatively include adjusting an attribute of a map, for example, "Set the transparency of map C to 80%" and "Add texture details of map D by 50%". The adjustment description text may alternatively be configured for replacing a map. The adjustment description text may alternatively describe replacement of an existing map, for example, "Replace map E with new map F".

In some embodiments, the preset adjustment effect is an expected goal or result of adjustment on a virtual object (such as a computer graphic, an object in virtual reality, or a digital model). It describes a specific change or improvement that a user or a system expects to achieve by using an operation or an algorithm. For example, in a virtual reality environment, the preset adjustment effect may refer to changing a size, a position, a color, or texturing of a virtual object, to cause the virtual object to be more suitable for a particular application scene or a user requirement.

In some embodiments, the adjustment description text is specific text information for describing the preset adjustment effect on the virtual object. It usually includes a detailed description of the preset adjustment effect, including a parameter, a target value, an expected effect, and the like of the adjustment. The adjustment description text is a communication bridge between people and a computer system or an algorithm, and helps the system understand a specific requirement of a user and perform a corresponding operation based on this. In a technical document or a code, the adjustment description text may appear in a form such as a code annotation, a configuration file, a user input, and the like.

As an example, in image editing software, if a user expects to move a virtual object (e.g. a graphic logo) from a position to another position and change a size of the virtual object, the preset adjustment effect may be: a user expects to move an object from a current position to a specified new position and change its size to 50% of its original size. The adjustment description text may be a piece of descriptive text or a code annotation below: preset adjustment effect: Move object A to coordinates (x = 100, y = 200) and adjust its size to 50% of its original size.

In some embodiments, that adjustment description text for describing a preset adjustment effect on the virtual object is obtained may be implemented in the following manner: generating, in response to an editing operation on the adjustment description text, the adjustment description text for describing the preset adjustment effect on the virtual object.

In some embodiments, the editing operation performed by a user on the adjustment description text needs to be identified. These operations may include adding a new adjustment instruction, modifying an existing instruction, deleting an instruction, or adjusting a parameter of an instruction. Edited adjustment description text is parsed to understand an adjustment intention of the user for the virtual object. This usually needs to use a natural language processing technology, including lexical analysis, grammatical analysis, and the like, to extract a specific adjustment instruction and a related parameter. Based on a parsing result, the system generates an intermediate representation. This representation is usually a data structure, such as an object, a dictionary, or JSON, and accurately describes an adjustment operation expected by the user. The intermediate representation is converted into new adjustment description text. This process involves converting data and an instruction in the intermediate representation into a human-readable text form, so that it is convenient for the user to understand the data and the instruction or perform further editing if required.

As an example, the user may edit the adjustment description text through a graphical user interface (GUI) or a text editor, and needs to detect the following editing operations, such as insertion, deletion, replacement, and the like of text; analyze edited text to extract an adjustment instruction and a parameter, for example, if the user modifies "Increase the width of object A by 10%" to "Increase the width of object A by 20%", a change in a specific value of width adjustment from 10% to 20% needs to be identified; and create an intermediate representation to store the adjustment instruction and the parameter that are obtained by the analysis, for example, a dictionary structure may include key "object_id" corresponding to value "A", key "attribute" corresponding to value "width", and key "change" corresponding to value "+20%". The intermediate representation is converted into adjustment description text. This may involve template filling, character string splicing, or another text processing technology. For example, the above intermediate representation may be converted into the following adjustment description text: "Adjust the width of object A and increase the width by 20%".

In some embodiments, in a process of generating the adjustment description text for describing the preset adjustment effect on the virtual object, the following factors may be further considered: the generated adjustment description text needs to conform to a particular grammar rule to ensure that a virtual object system can correctly parse and execute the adjustment description text. The adjustment description text is to be consistent with an intention of the editing operation of the user, to avoid an ambiguity or a misunderstanding. The adjustment description text is easy for the user to read and understand, especially for a nontechnical user. Finally, the generated adjustment description text becomes an interface between the user and the virtual object system, and instructs the system to adjust the virtual object based on the intention of the user.

In this way, the intention of adjusting the virtual object may be definitely conveyed based on the adjustment description text. This is conductive to ensuring that the adjustment on the virtual object can meet a design requirement and a user expectation. In actual application, the adjustment description text may exist in a form of a programming interface invoking parameter, a configuration file, a user input instruction, and the like, and is configured for instructing a rendering and interaction process of the virtual object.

In operation 102, a virtual camera is controlled to capture the virtual object at a plurality of different capturing angles, to obtain captured images respectively corresponding to the capturing angles.

In some embodiments, the virtual camera is a "camera" built in computer animation software or a virtual engine. A function of the virtual camera for representing a viewpoint during animation production is equivalent to a camera in a conventional sense. An object captured by the virtual camera is completely different from an object captured by a physical camera, but functions of the cameras are quite similar. The physical camera captures a real person or an actually established scene. The virtual camera captures a model established in three-dimensional software, and can implement infinite possibilities. The virtual camera is presented in the virtual engine in a form of an icon, and also has parameters such as a lens, a focal length, a focus, an aperture, and a depth of field. The virtual camera can implement camera actions such as "pushing, pulling, shaking, moving, following, throwing, rising, lowering, and comprehensive movement", and can implement capturing effects that are difficult or even impossible to be implemented by the physical camera, for example, penetrating through a wall, passing through a key hole, passing through an object. To-be-adjusted parameters of the physical camera are distributed on a camera body of the physical camera and need to be manually operated. A camera parameter of the virtual camera is a button or a value input bar integrated in a panel. An operator only needs to enter a parameter or drag a mouse. Sometimes, a motion path of the virtual camera may be determined by using only several key frames. During actual capturing, the physical camera usually needs to have a stabilizer or a motion control system. However, even in this case, a picture still shakes.

In some embodiments, the virtual object is located at a target position in the virtual scene. The virtual camera is controlled to capture, at the plurality of different capturing angles, the virtual object located at the target position to obtain the captured images respectively corresponding to the capturing angles.

As an example, a virtual scene is created, which includes a virtual object that a user intends to capture. A plurality of capturing angles are determined. These angles may be fixed predefined positions, or may be dynamically calculated based on specific requirements. For example, the following capturing angles may be defined: a front view: in which the camera directly faces the object; a side view: in which the camera is located on a side of the object; a top view: in which the camera is located right above the object; and an oblique view: in which the camera is located at a corner of the object, forming an oblique viewing effect. For each capturing angle, a position and direction of the virtual camera are set. The scene is rendered by using a rendering function of the virtual engine. During rendering, the virtual engine calculates illumination, shadow, and a view of a scene based on the position and direction of the camera. After the rendering is completed, an image representing a particular capturing angle may be obtained. The image may be 2D or 3D based on a capability of the virtual engine and complexity of the scene. The obtained captured image at each angle is stored for subsequent use. These images may be configured for various purposes, such as virtual reality application, animation production, and game development. In this way, the captured images of the virtual object may be obtained from the plurality of angles, and each image reflects a view of the virtual camera in a particular angle. These images may be configured for creating a dynamic visual effect to enhance immersion of a user in a virtual environment.

In some embodiments, FIG. 4 is a flowchart II of an object map generation method provided by an embodiment of this application. Operation 102 shown in FIG. 3 may be implemented through operation 1021 to operation 1023 shown in FIG. 4.

In operation 1021, a central position of a geometric center of the virtual object in the virtual scene is obtained.

In some embodiments, the central position of the geometric center of the virtual object in the virtual scene is configured for indicating position coordinates of the geometric center of the virtual object in the virtual scene.

In some embodiments, the central position is configured for performing standardization processing on the virtual object to obtain a standardized target virtual object.

As an example, it is assumed that there is a virtual scene, which includes one or more virtual objects. It is intended to find a geometric center of a particular object and place the center point at a central position of the scene. Each virtual object needs to be defined. This is usually completed by creating a 3D model. The model includes vertexes, surfaces, and other geometric information. An average position of all the vertexes of the object is calculated. If each object includes a plurality of parts, a center of each part may be calculated, and then an overall center is calculated based on a weight of each part. The central position of the virtual scene needs to be determined by calculating an average position of centers of all the objects in the scene.

In operation 1022, standardization processing is performed on the virtual object in the virtual scene based on the central position, to obtain a target virtual object.

In some embodiments, the standardization processing refers to a processing process of obtaining a standardized target virtual object by standardizing the virtual object. The standardization processing is a processing manner of processing the virtual object in the virtual scene, aiming to unify and standardize position data of the object with reference to the central position. Different object parts of the virtual object may have bulges, causing an uneven surface of the virtual object. Bulge parts easily cause visual occlusion on recess parts. Consequently, the recess parts of the virtual object cannot be accurately acquired from subsequently acquired captured images. In this way, to make the subsequently acquired captured images completer and more comprehensive, the standardization processing is performed on the virtual object, so that the recess parts before the standardization processing can be accurately acquired from the subsequently acquired captured images, and the acquired captured images can accurately and comprehensively describe the virtual object at the corresponding capturing angles.

In some embodiments, operation 1022 may be implemented in the following manner: obtaining positions of a plurality of object parts of the virtual object respectively in the virtual scene, determining distances between the positions and the central position, and determining a maximum distance as a reference distance; and performing the following processing on each object part of the virtual object, to obtain the target virtual object: dividing the distance corresponding to the object part by the reference distance, to obtain a standard position of the object part in the virtual scene; and adjusting the position of the object part to the standard position.

As an example, specific positions of different parts of the virtual object in the virtual scene need to be determined. These parts may be particular points of the object, such as a vertex, a centroid, or any point with space coordinates. For example, if the virtual object is a human body model, the parts may include the head, the chest, the arms, the legs, and the like. The distance between each object part and the central position of the virtual scene is calculated. This is usually completed based on a Euclidean distance formula. By using the formula, a straight-line distance between two points in a three-dimensional space is calculated. A maximum distance is selected from all calculated distances as the distance. The reference distance is used as a scale, which defines a relative size of the object part in the standardization process. The distance between the object part and the central position is divided by the reference distance to obtain a standardization scale value between 0 and 1. The scale value represents a standard position of the object part relative to the central position. The position of the object part is adjusted based on the calculated standardization scale value. This usually involves summing actual coordinates of the object part and coordinates of the central position and multiplying a sum by the standardization scale value. Through this process, each part of the virtual object is repositioned at a relatively standardized distance from the central position, thereby creating, in the virtual scene, a consistent coordinate system using the central position as a reference. This ensures a uniform distribution of the virtual object in the scene.

As an example, an expression of the standard position of the above object part in the virtual scene may be:

$$V_i^* = \left[ \frac{X_i - X_{mean}}{d_{max}} \cdot s, \frac{Y_i - Y_{mean}}{d_{max}} \cdot s, \frac{Z_i - Z_{mean}}{d_{max}} \cdot s \right] \tag{1}$$

where $V_i^*$ is configured for indicating the standard position of the object part in the virtual scene; $\frac{X_i - X_{mean}}{d_{max}} \cdot s$ is configured for indicating an x-coordinate of the standard position in the virtual scene; $\frac{Y_i - Y_{mean}}{d_{max}} \cdot s$ is configured for indicating a y-coordinate of the standard position in the virtual scene; $\frac{Z_i - Z_{mean}}{d_{max}} \cdot s$ is configured for indicating a z-coordinate of the standard position in the virtual scene; $X_i$ is configured for indicating a horizontal axis component of a distance corresponding to the object part; $Y_i$ is configured for indicating a longitudinal axis component of a distance corresponding to the object part; $Z_i$ is configured for indicating a vertical axis component of a distance corresponding to the object part; $d_{max}$ is configured for indicating the reference distance; $X_{mean}$ is configured for indicating an x-coordinate of the central position; $Y_{mean}$ is configured for indicating a y-coordinate of the central position; and $Z_{mean}$ is configured for indicating a z-coordinate of the central position.

As an example, an expression of the above reference distance may be:

$$d_{max} = \max\{d_1, d_2, d_i \cdots, d_N\} \tag{2}$$

where $d_{max}$ is configured for indicating the reference distance, and $d_1, d_2, d_i \cdots, d_N$ is configured for indicating a distance corresponding to each object part.

As an example, an expression of the distance corresponding to an object part i may be:

$$d_i = \sqrt{(X_i - X_{mean})^2 + (Y_i - Y_{mean})^2 + (Z_i - Z_{mean})^2} \qquad (3)$$

where $d_i$ is configured for indicating the distance corresponding to the object part i; $X_i$ is configured for indicating an x-coordinate of the position of the object part i in the virtual scene; $Y_i$ is configured for indicating a y-coordinate of the position of the object part i in the virtual scene; $Z_i$ is configured for indicating a z-coordinate of the position of the object part i in the virtual scene; $X_{mean}$ is configured for indicating the x-coordinate of the central position; $Y_{mean}$ is configured for indicating the y-coordinate of the central position; and $Z_{mean}$ is configured for indicating the z-coordinate of the central position.

In this way, precise placement and positioning of the virtual object may be implemented by obtaining the positions of the parts of the virtual object in the virtual scene, to ensure that a spatial relationship of the virtual object in a virtual environment conforms to an expectation. By calculating the distance between each part and the central position and determining the maximum distance as the reference distance, a uniform reference can be provided for subsequent position adjustment. By dividing the position distance of each part by the reference distance, original position information may be converted into scale information. In this way, position relationships of the parts can be kept consistent even in virtual scenes with different sizes. By adjusting the positions of the parts to a reference-distance-based standard position, the virtual object can be more visually balanced and harmonious, thereby improving overall aesthetics. It can adapt to different virtual environments. Since the adjustment is performed based on a distance scale, consistency of the objects can be maintained in different scenes as long as consistency of the reference distances is ensured.

In operation 1023, the virtual camera is controlled to capture the target virtual object at the plurality of different capturing angles, to obtain the captured images respectively corresponding to the capturing angles.

In some embodiments, the virtual camera can capture only a part of the target virtual object within a view range at different capturing angles. By controlling the virtual camera to capture the target virtual object at the plurality of different capturing angles, the obtained captured images respectively corresponding to the capturing angles can present the virtual object in an all-round manner.

In some embodiments, operation 1023 may be implemented in the following manner: determining, in the virtual scene, a plurality of capturing positions that are away from the central position by a distance equal to a target distance, the capturing angles and the capturing positions being in one-to-one correspondence; and controlling, for each capturing position, the virtual camera to: be located at the capturing position, face the target virtual object, and capture the target virtual object, to obtain the captured image corresponding to the corresponding capturing angle.

In some embodiments, a value of the target distance may be set based on an actual acquisition precision requirement. The value of the target distance is positively correlated to acquisition precision. A larger value of the target distance corresponds to higher acquisition precision, and a smaller value of the target distance corresponds to lower acquisition precision. A longer target distance indicates that the virtual camera is closer to the virtual object, and the virtual camera can implement finger-grained acquisition on the virtual object.

In some embodiments, the value of the target distance is negatively correlated to an acquisition range of the virtual camera for the virtual object. A smaller value of the target distance corresponds to wider acquisition range of the virtual camera for the virtual object, and a larger value of the target distance corresponds to a narrower acquisition range of the virtual camera for the virtual object. A longer target distance indicates that the virtual camera is closer to the virtual object, and the virtual camera has a narrower acquisition range for the virtual object.

In an example, for a virtual museum, many precious virtual art pieces are presented in the virtual museum. To enable a visitor to appreciate these art pieces from different viewing angles, the virtual camera needs to be controlled to capture the art pieces at a plurality of different angles, to obtain all-directional captured images. The virtual camera is controlled to capture an art piece in the front view. This angle can present a front feature of the art piece, such as a facial expression of a person or a main facade of a building. The angle of the camera is adjusted to capture the art piece in the side view. In this way, a side outline of the art piece or a body posture of the person may be presented. The art piece is captured in the rear view, so that an observer can see a back design or structure of the art piece. Capturing may alternatively be performed in the top view or the bottom view to present visual effects of the art piece in different views. For example, an entire layout of the art piece can be presented if the art piece is captured in the top view, while details of the art piece can be stressed if the art piece is captured in the bottom view. In addition to a static capturing angle, a dynamic effect of the art piece may be further presented by means of dynamic capturing, for example, by translating or rotating the camera. Through the capturing at the above various angles, a series of captured images can be obtained. These images not only can present external features of the virtual object in an all-round manner, but also can make a viewer have an immersive experience in the virtual environment. This approach is not limited to being applied to the museum, but it is also widely applied to fields such as product presentation, building design examination, and virtual travel. By controlling the virtual camera to capture the target virtual object at the plurality of different capturing angles, a presentation effect on the virtual object can be greatly enhanced, thereby bringing a richer and more real virtual experience to a user.

In this way, different object parts of the virtual object may have bulges, causing an uneven surface of the virtual object. Bulge parts easily cause visual occlusion on recess parts. Consequently, the recess parts of the virtual object cannot be accurately acquired from subsequently acquired captured images. In this way, to make the subsequently acquired captured images completer and more comprehensive, the standardization processing is performed on the virtual object, so that the recess parts before the standardization processing can be accurately acquired from the subsequently acquired captured images, and the acquired captured images can accurately and comprehensively describe the virtual object at the corresponding capturing angles.

In operation 103, image adjustment is respectively performed on the captured images based on the adjustment description text, to obtain reference images corresponding to the captured images.

In some embodiments, the reference images satisfy the preset adjustment effect described by the adjustment description text. The image adjustment refers to a processing process of adjusting image content of the captured images, so as to satisfy the preset adjustment effect.

In some embodiments, in a virtual reality scene, a game development scene, or any scene that requires a highly realistic image, adjusting the captured images is to ensure that the captured images meet a particular quality standard or satisfy a preset visual effect. Performing the image adjustment on the captured images based on the adjustment description text mainly involves two aspects: image content adjustment and super resolution processing. For the image content adjustment, color correction may be performed: a color balance of an image needs to be adjusted, so that a color of the image better conforms to a standard in a real world or meets a requirement of a particular artistic style. Contrast enhancement may be further performed: by enhancing a contrast of an image, details of the image can be clearer and a visual effect is more prominent. Brightness adjustment may be further performed: brightness of an image is adjusted, so that the image can maintain a proper display effect in different lighting conditions. Cropping and rotation may be further performed: an image is cropped based on a need, to remove a redundant part, or an image is rotated to obtain a better view. Image filtering may be further performed: different filtering algorithms are used to smooth an image or remove noise from an image, which is more common especially in pictures taken in a low light condition. Super resolution processing: super resolution reconstruction may be performed, which involves inferring high-resolution details from a low-resolution image. For the captured images, if they are low in resolution, the super resolution processing may be used to improve definitions and detail levels of the images. Detail enhancement may be further performed: when image content is kept unchanged, details of an image are added based on an algorithm, so that the image seems to be more high-definition. Through the above image adjustment, the obtained reference images better conform to an expected text description, and can better serve a final application scene. For example, during game development, the reference images may be required to reflect a particular artistic style. In a virtual game, the reference images may be required to have sufficient details and a clear field of view, so that a user can obtain an immersive experience.

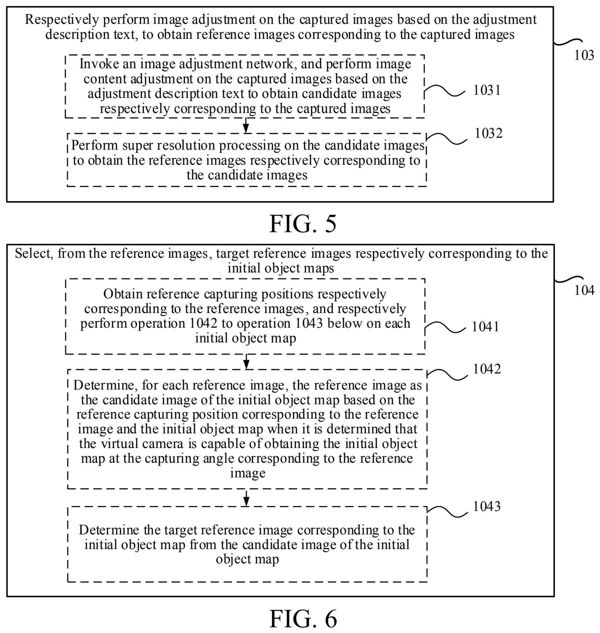

In some embodiments, FIG. 5 is a flowchart III of an object map generation method provided by an embodiment of this application. Operation 103 shown in FIG. 3 may be implemented through operation 1031 to operation 1032 shown in FIG. 5.

In operation 1031, an image adjustment network is invoked, and image content adjustment is performed on the captured images based on the adjustment description text to obtain candidate images respectively corresponding to the captured images.

In some embodiments, the candidate images satisfy the preset adjustment effect described by the adjustment description text.

In some embodiments, the image adjustment network may be a convolutional neural network (CNN). The CNN is a type of feedforward neural network (FNN) including convolutional computation and having a deep structure, and is one of representative algorithms of deep learning. The CNN has a representation learning capability, and can perform shift-invariant classification on an input image according to a hierarchical structure thereof.

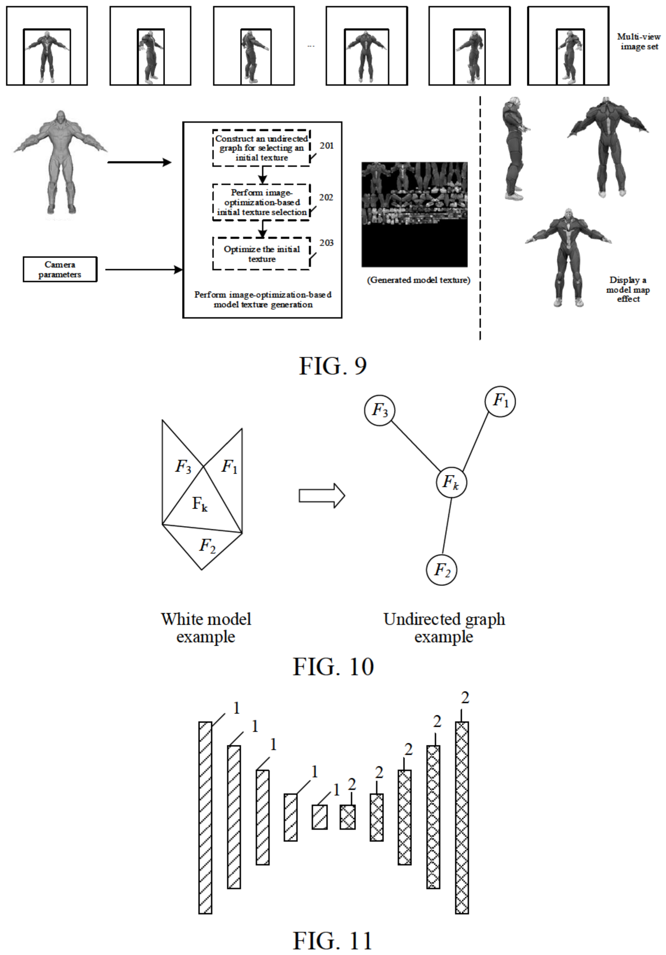

For example, FIG. 11 is a schematic structural diagram of an image adjustment network provided by an embodiment of this application. The image adjustment network includes an encoding layer 1 and a decoding layer 2. Operation 1031 may be implemented in the following manner: invoking the encoding layer 1, and performing image content encoding on the captured images based on the adjustment description text, to obtain image features respectively corresponding to the captured images; and invoking the decoding layer 2, and performing image content adjustment on the captured images based on the image features, to obtain the candidate images respectively corresponding to the captured images.

In some embodiments, the image adjustment network may be obtained through training in the following manner: obtaining an initial image adjustment network, and obtaining an adjustment description text sample, a label image, and a captured image sample, the label image satisfying a preset adjustment effect described by the text sample; invoking the initial image adjustment network, and performing image content adjustment on the captured image sample based on the adjustment description text sample, to obtain an adjusted image corresponding to the captured image sample; and determining a loss value of the initial image adjustment network based on the adjusted image and the label image, and training the initial image adjustment network based on the loss value, to obtain the image adjustment network.

In some embodiments, a defined neural network is required, which can adjust image content based on text descriptions. The network may be a convolutional neural network (CNN), and is specifically designed for image content adjustment. A group of sample data is required, including a text description (the adjustment description text sample), a corresponding adjusted image (the label image), and an original unadjusted image (the captured image sample). The label image is required to satisfy the preset adjustment effect described by the text sample. The initial image adjustment network is used to perform the image content adjustment on the captured image sample based on the adjustment description text sample. The network may attempt to adjust the image, so that the image better satisfies the preset adjustment effect described by the text. After the processing performed by the network, a group of adjusted images are obtained. These images are to be closer to the label image and satisfy the preset adjustment effect described by the text. The loss value of the initial image adjustment network is calculated based on the adjusted image and the label image. The loss value is a metric and represents a difference between the adjusted image and the label image. The initial image adjustment network is trained based on the calculated loss value. In a training process, the network may learn how to more accurately adjust the image content based on the text description. This process involves adjusting a weight of the network to reduce the loss value. Through this process, the initial image adjustment network can gradually learn how to adjust the image content based on the text description, thereby improving accuracy and an effect of the network. The is process may be repeatedly performed. After each training, the performance of the network can be improved, and the preset adjustment effect of a user can be better satisfied.

In some embodiments, the loss value of the initial image adjustment network may be a similarity between the adjusted image and the label image.

In operation 1032, super resolution processing is performed on the candidate images to obtain the reference images respectively corresponding to the candidate images.

In some embodiments, super resolution processing, also referred to as image super resolution, refers to restoring a high-resolution image from a low-resolution image or an image sequence. The super resolution processing includes super resolution restoration and super resolution reconstruction. The super resolution processing may improve the resolution of an original image through hardware or software and is a process of obtaining a high-resolution image based on a series of low-resolution images, i.e. super resolution reconstruction. A core idea of the super resolution reconstruction is to trade a time bandwidth (obtain a plurality of frames of image sequences of the same scene) for a spatial resolution, to implement conversion of a time resolution to a spatial resolution.

In some embodiments, an image resolution of each reference image is greater than an image resolution of the corresponding candidate image, and image content of the reference image is completely the same as image content of the corresponding candidate image.

In this way, by performing the super resolution processing on the candidate images to obtain the reference images respectively corresponding to the candidate images, the image resolutions of the candidate images can be significantly improved when the image content of the original candidate images remains unchanged, thereby effectively improving image quality of the candidate images and enabling the reference images to more clearly and accurately reflect the virtual object.

In operation 104, target reference images respectively corresponding to the initial object maps are selected from the reference images.

In some embodiments, the virtual camera can obtain the corresponding initial object maps at the capturing angles corresponding to the target reference images.

In some embodiments,
in some embodiments, FIG. 6 is a flowchart IV of an object map generation method provided by an embodiment of this application. Operation 104 shown in FIG. 3 may be implemented through operation 1041 to operation 1043 shown in FIG. 6.

In operation 1041, reference capturing positions respectively corresponding to the reference images are obtained, and operation 1042 to operation 1043 below are respectively performed on each initial object map.

In some embodiments, the reference capturing positions are configured for indicating positions of the virtual camera in the virtual scene during capturing of the captured images corresponding to the reference images.

In operation 1042, for each reference image, the reference image is determined as the candidate image of the initial object map based on the reference capturing position corresponding to the reference image and the initial object map when it is determined that the virtual camera is capable of obtaining the initial object map at the capturing angle corresponding to the reference image.

In some embodiments, the reference image is not determined as the candidate image of the initial object map when it is determined that the virtual camera is not capable of obtaining the initial object map at the capturing angle corresponding to the reference image.

As an example, for reference image A, reference image A is determined as the candidate image of the initial object map based on the reference capturing position corresponding to reference image A and the initial object map when it is determined that the virtual camera can obtain the initial object map at the capturing angle corresponding to reference image A. For reference image B, reference image B is determined as the candidate image of the initial object map based on the reference capturing position corresponding to reference image B and the initial object map when it is determined that the virtual camera cannot obtain the initial object map at the capturing angle corresponding to reference image B.

In some embodiments, before operation 1042, whether the virtual camera is capable of obtaining the initial object map at the capturing angle corresponding to the reference image may be determined in the following manner: obtaining a texturing position of the initial object map in the virtual scene, and connecting the texturing position to the reference capturing position in the virtual scene, to obtain a virtual detection line; determining, when the virtual detection line does not pass through another initial object map in the virtual scene, that the virtual camera is capable of obtaining the initial object map at the capturing angle corresponding to the reference image; and determining, when the virtual detection line passes through another initial object map in the virtual scene, that the virtual camera is not capable of obtaining the initial object map at the capturing angle corresponding to the reference image.

In some embodiments, the virtual detection line is configured for detecting whether the virtual camera can obtain the initial object map at the capturing angle corresponding to the reference image.

In some embodiments, when the virtual detection line does not pass through another initial object map in the virtual scene, it indicates that no another initial object map in the virtual scene causes line of sight blocking to a current initial object map, so that the virtual camera can obtain the initial object map at the capturing angle corresponding to the reference image. When the virtual detection line passes through another initial object map in the virtual scene, it indicates that the another initial object map in the virtual scene causes line of sight blocking to a current initial object map, so that the virtual camera cannot obtain the initial object map at the capturing angle corresponding to the reference image.

In operation 1043, the target reference image corresponding to the initial object map is determined from the candidate image of the initial object map.

In some embodiments, operation 1043 may be implemented in the following manner: determining, when there is one candidate image for the initial object map, the candidate image as the target reference image corresponding to the initial object map; determining a degree of association between the initial object map and each candidate image when there are a plurality of candidate images for the initial object map; and determining a candidate image corresponding to a maximum degree of association as the target reference image corresponding to the initial object map.

In some embodiments, a larger value of the degree of association indicates higher association between the initial object map and the candidate image, and a smaller value of the degree of association indicates lower association between the initial object map and the candidate image.

In some embodiments, the foregoing determining a degree of association between an initial object map and each candidate image may be determined in the following manner: determining an adjacency object map of the initial object map from the plurality of initial object maps of the virtual object, and performing the following processing on each candidate image: determining a first degree of association of the candidate image based on the adjacency object map and the candidate image; determining an imaging region of the initial object map in the candidate image, and determining a second degree of association of the candidate image based on an area of the imaging region; and summing the first degree of association and the second degree of association, to obtain the degree of association between the initial object map and the candidate image.

In some embodiments, a value of the second degree of association is positively correlated to the area of the imaging region, and the first degree of association is correlated to the adjacency object map.

As an example, an expression of the above degree of association may be:

$$E(l) = \sum_{F_k \in V_1} E_{data}(F_k, l_i) + \sum_{(F_k, F_j) \in \Phi_1} E_{smooth}(F_k, F_j, l_i, l_j) \qquad (4)$$

where $E(l)$ is configured for indicating the degree of association; $\sum_{F_k \in V_1} E_{data}(F_k, l_i)$ is configured for indicating the second degree of association; and $\sum_{(F_k, F_j) \in \Phi_1} E_{smooth}(F_k, F_j, l_i, l_j)$ is configured for indicating the first degree of association.

In some embodiments, that a first degree of association of the candidate image is determined based on the adjacency object map and the candidate image may be implemented in the following manner: determining the first degree of association of the candidate image as a first value when the candidate image is a candidate image of the adjacency object map, the first value being a non-zero constant; and determining the first degree of association of the candidate image as a second value when the candidate image is not the candidate image of the adjacency object map.

In some embodiments, the first value is the non-zero constant, and the second value is equal to zero.

In some embodiments, when the candidate image is not the candidate image of the adjacency object map, it indicates that the adjacent image does not interfere with the current candidate image. In this case, the value of the first degree of association may be determined as zero. When the candidate image is the candidate image of the adjacency object map, it indicates that the adjacent image interferes with the current candidate image. In this case, the value of the first degree of association may be determined as the non-zero constant.

In this way, when there are the plurality of candidate images for the initial object map, the candidate image corresponding to the maximum degree of association is determined as the target reference image corresponding to the initial object map. Since the degree of association can accurately reflect an association relationship between the candidate image and the initial object map, the candidate image with the highest association is determined as the target reference image of the initial object map, so that the target object map of the initial object map that is subsequently determined based on the candidate image can accurately express the preset adjustment effect, and the obtained target object map is more accurate.

In operation 105, target object maps satisfying the preset adjustment effect are generated based on the target reference images and the initial object maps.

In some embodiments, the initial object maps and the target object maps are in one-to-one correspondence. Operation 105 may be implemented in the following manner: adjusting, for each initial object map, the initial object map based on the initial object map and the corresponding target reference image, to obtain the target object map that satisfies the preset adjustment effect and corresponds to the initial object map.

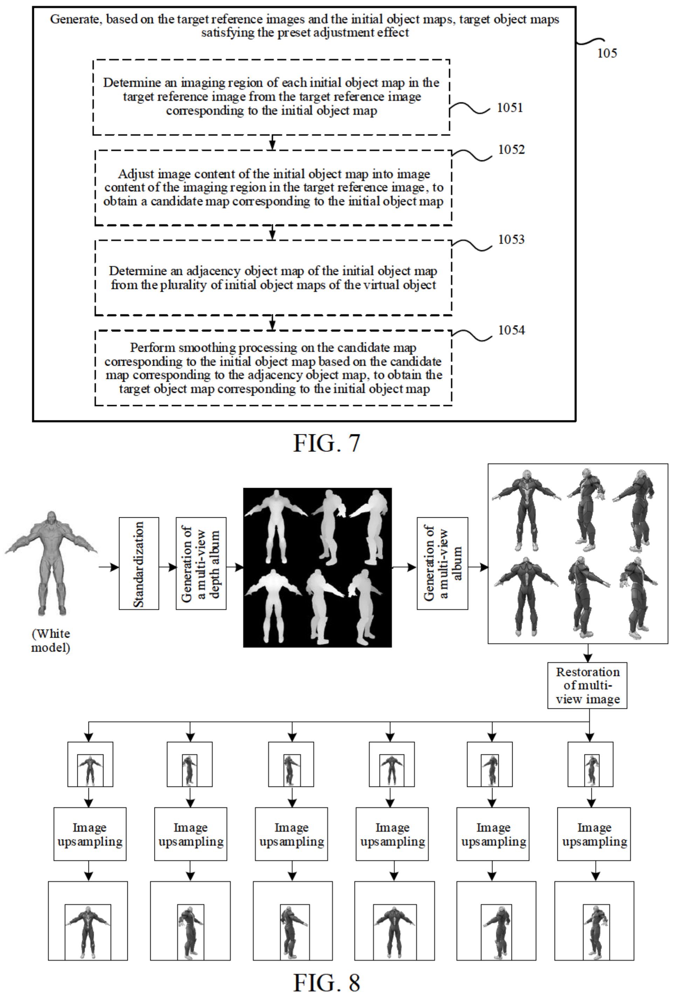

In some embodiments, FIG. 7 is a flowchart V of an object map generation method provided by an embodiment of this application. Operation 105 shown in FIG. 3 may be implemented by performing operation 1051 to operation 1054 shown in FIG. 7 on each initial object map.

In operation 1051, an imaging region of the initial object map in the target reference image is determined from the target reference image corresponding to the initial object map.

In some embodiments, the virtual camera corresponding to the target reference image can acquire an initial object map of a part of the virtual object at the corresponding capturing angle, so that the target reference image includes the imaging region corresponding to each acquired initial object map, and the imaging region of the initial object map in the target reference image may be determined from the target reference image corresponding to the initial object map.

In some embodiments, in computer graphics and a virtual reality technology, object texturing is a common technology for adding textures and colors to a three-dimensional model, to make the three-dimensional model look more authentic. This process usually involves mapping a two-dimensional image (map) to a surface of the three-dimensional model. When the imaging region of the initial object map in the target reference image is determined from the target reference image corresponding to the initial object map, it actually means that a particular region on the map is mapped to a corresponding region of the target reference image.

In operation 1052, image content of the initial object map is adjusted into image content of the imaging region in the target reference image, to obtain a candidate map corresponding to the initial object map.

In some embodiments, the target reference image includes the imaging region corresponding to each acquired initial object map. Since the target reference image satisfies the preset adjustment effect, each imaging region in the target reference image satisfies the preset adjustment effect. The image content of the initial object map is adjusted into the image content of the imaging region in the target reference image, to obtain the candidate map corresponding to the initial object map, so that the obtained candidate map can satisfy the preset adjustment effect.

In some embodiments, the target reference image is analyzed to determine a to-be-textured region. This usually involves an image analysis technology, such as edge detection and image segmentation, to identify the imaging region in the target reference image. There is an initial object map which is a two-dimensional image and includes texture information that needs to be textured into the target reference image. The image content of the initial object map is adjusted based on the imaging region of the target reference image. This may include adjusting a color, brightness, contrast, saturation, and the like, so that the map can better adapt to a visual effect of the target reference image. After the content of the map is adjusted, the map needs to be mapped to the imaging region of the target reference image and is fused with another region. This usually involves image blending and edge fusion technologies, so as to create a smooth and natural transition effect. After the above operations, the candidate map corresponding to the initial object map is obtained. The map may be applied to image synthesis or texture mapping, to enhance sense of reality and details of the target reference image.

As an example, if a wooden texture map needs to be textured onto a virtual desktop model, an image of a desktop needs to be analyzed to determine a to-be-textured region. Then, a color and brightness of the wooden texture are adjusted to adapt to illumination and color of the desktop. Finally, the texture is mapped onto the desktop and is fused with another part, to obtain a wooden desktop image with a sense of reality.

In operation 1053, an adjacency object map of the initial object map is determined from the plurality of initial object maps of the virtual object.

In some embodiments, the adjacency object map of the initial object map refers to an initial object map that has an adjacency relationship with the initial object map on the virtual object. To be specific, the adjacency object map of the initial object map and the initial object map are adjacent to each other on the virtual object.

In some embodiments, a quantity of adjacency object maps of the initial object map is a positive integer greater than or equal to 1.

In some embodiments, in the computer graphics, texture mapping is a process of mapping a texture (usually a two-dimensional image) to a surface of a three-dimensional model, to create a more realistic visual effect. When one virtual object includes a plurality of initial object maps, the maps possibly need to be connected to each other to maintain overall consistency and continuity. That an adjacency object map of the initial object map is determined refers to identifying and determining another initial object map, adjacent to a particular initial object map, on a surface of the virtual object. For each initial object map, an adjacency region of the initial object map on the surface of the virtual object is identified, and a joint or a transition region between adjacent maps is determined through a technology such as edge detection and feature matching.

As an example, it is assumed that there is a face model including a plurality of maps. Each map represents a different region of a face, such as the eyes, the nose, and the mouth. When the maps are textured to the face model, it needs to ensure that the maps of the eyes are correctly adjacent to the map of the nose and the map of the mouth, so as to maintain overall continuity of the face.

In operation 1054, smoothing processing is performed on the candidate map corresponding to the initial object map based on the candidate map corresponding to the adjacency object map, to obtain the target object map corresponding to the initial object map.

In some embodiments, the smoothing processing refers to adjusting a color value of the candidate map, to cause a color difference between the candidate map corresponding to the initial object map and the candidate map of the adjacency object map approaches to be stable, so that map distortion caused by a large color difference is avoided, thereby effectively improving stability of a color value of the target object map.

In some embodiments, operation 1054 may be implemented in the following manner: performing the following processing on each pixel in the candidate map corresponding to the initial object map to obtain the target object map: determining the pixel as a to-be-smoothed pixel when a minimum distance between the pixel and the candidate map corresponding to the adjacency object maps is less than a distance threshold; determining, from pixels of the candidate map corresponding to the adjacency object map, a reference pixel closest to the to-be-smoothed pixel; averaging a color value of the reference pixel and a color value of the to-be-smoothed pixel to obtain an average color value; and adjusting the color value of the to-be-smoothed pixel into the average color value.

As an example, it is assumed that there is a three-dimensional model, a surface of which includes a plurality of initial object maps. The maps need to be smoothly connected to create a continuous appearance. In this process, there may be holes or sharp edges on the surface of the model, and a distance between adjacent maps in these places may be very short, causing a significant joint in a mapped image. To solve this problem, the adjacent maps may be gently mixed by using the smoothing processing. The surface of the three-dimensional model needs to be analyzed to determine which maps are adjacent to each other. For example, a left side and right side of the model may include different maps, but the maps are continuous on the surface of the model. For a pixel on each map, a minimum distance between the pixel and a pixel on a candidate map corresponding to an adjacent map is calculated. This distance may be obtained by calculating a Euclidean distance between two pixels. If the minimum distance between the pixel and the candidate map corresponding to the adjacency object map is less than the set distance threshold, the pixel is determined as the to-be-smoothed pixel. The reference pixel closest to the to-be-smoothed pixel is found from the pixels of the candidate map corresponding to the adjacency object map. The reference pixel is configured for smoothing processing. The color value of the reference pixel and the color value of the to-be-smoothed pixel are averaged. The average color value is used as a new color value of the to-be-smoothed pixel. The color value of the to-be-smoothed pixel is adjusted into the calculated average color value. In this way, the pixels that may originally have joints can become smoother, and the appearance of the entire model is more natural. It is assumed that there is one pixel on a side map of the model and the pixel is very close to a pixel on an adjacent map, but is not completely aligned with the pixel on the adjacent map. By the smoothing processing, color values of the two pixels can be made closer to each other, thereby eliminating a joint.

In some embodiments, the determining, from pixels of the candidate map corresponding to the adjacency object map, a reference pixel closest to the to-be-smoothed pixel may be implemented in the following manner: obtaining a distance between each pixel and the to-be-smoothed pixel; and determining a pixel closest to the to-be-smoothed pixel among the pixels in the candidate map corresponding to the adjacency object map as the reference pixel.

In some embodiments, it is assumed that there is a three-dimensional model, a surface of which includes a plurality of initial object maps. When the maps are mapped to a surface of the model, in some regions, pixels between adjacent maps may not be completely aligned. This may cause joints or a discontinuous appearance. To smooth these joints, a pixel, which is closest to the to-be-smoothed pixel, on the adjacency object map needs to be found, and is used as the reference pixel. It is assumed that there is one pixel on a side map of the model and the pixel is very close to a pixel on an adjacent map, but is not completely aligned with the pixel on the adjacent map. It is found through calculation that a pixel on an adjacent map is closest to the pixel. Then, the closest pixel is used as the reference pixel, and the smoothing processing is performed on the to-be-smoothed pixel by using a color value of the closest pixel.

In this way, the smoothing processing refers to adjusting a color value of the candidate map, to cause a color difference between the candidate map corresponding to the initial object map and the candidate map of the adjacency object map approaches to be stable, so that map distortion caused by a large color difference is avoided, thereby effectively improving stability of a color value of the target object map.

In some embodiments, after target object maps satisfying the preset adjustment effect are generated based on the target reference images and the initial object maps, the following processing may be performed: respectively replacing the initial object maps on the virtual object with the corresponding target object maps, to obtain a target virtual object, the target virtual object satisfying the preset adjustment effect.

In this way, a plurality of initial object maps of a virtual object and adjustment description text are obtained; a virtual camera is controlled to capture the virtual object at a plurality of different capturing angles, to obtain captured images respectively corresponding to the capturing angles; image adjustment is respectively performed on the captured images based on the adjustment description text, to obtain reference images corresponding to the captured images; target reference images respectively corresponding to the initial object maps are selected from the reference images; and target maps satisfying the preset adjustment effect are generated based on the target reference images and the initial object maps. In this way, since there is at least one initial object map of the virtual object that is acquired from the captured images that are obtained by capturing the virtual object and respectively correspond to the capturing angles, the image adjustment is respectively performed on the captured images, and the obtained reference images can implement the content adjust on the at least one initial object map corresponding to the captured images. The at least one initial object map can be adjusted based on the reference image corresponding to each initial object map, namely, the target map generated based on each target reference image. Therefore, the image adjustment does not need to be performed on each initial object map, but only needs to be respectively performed on the captured images. In this way, all initial object maps can be adjusted, thereby effectively reducing a number of times of image adjustment. Meanwhile, the generated target object maps can satisfy the preset adjustment effect, thereby effectively improving object map generation efficiency.

The following describes exemplary application of this embodiment of this application in an actual application scene for transforming a virtual object.

Texture generation aims to generate a corresponding three-dimensional model texture map based on a text prompt entered by a user, and has a broad application prospect in fields such as games, films and television, virtual reality, and 3D printing.

In an application scene of a game, the embodiments of this application can help a game producer to quickly generate a model texture map asset that the producer requires, thereby increasing a development speed of the game and improving game manufacturing efficiency. This helps a player produce a texture map of a three-dimensional model that the player is interested in and import the texture map into the game for use, thereby improving a sense of participation of a user.

In product design and manufacturing, a designer may be helped to rapidly generate the texture map corresponding to the three-dimensional model. Based on this, a generated model texture is further optimized. Then, these three-dimensional models with texture information are configured for instructing a production process, for example, manufacturing an entity product through 3D printing.

In virtual reality and augmented reality, in the embodiments of this application, texture maps of a large number of three-dimensional models can be rapidly generated, to enrich virtual world scenes, thereby creating more realistic virtual reality (VR) and augmented reality (AR) experiences.

In education and training, in this embodiment of this application, a texture map of a three-dimensional model of an object that a learner is interested in may be generated, thereby implementing a more three-dimensional and authentic experience, to help the learner better observe and understand specific object concepts and increase the fun of learning.

In this embodiment of this application, a multi-view album is first generated based on a three-dimensional model given by a user and an input text description for a target texture map effect; and an overall consistent model texture map is then generated based on the multi-view album. A model texture can be quickly generated, and it can ensure that the generated model texture has sufficient richness.

Usually, a complete three-dimensional model includes two parts: geometry and texture. The geometry is usually represented by using a triangular mesh. The texture is represented by using a two-dimensional image. If the three-dimensional model has geometric information, but no texture information, the three-dimensional model is referred to as a white model. This embodiment of this application aims to generate a proper texture map for the white template without a texture, and a core part is a Depth2Image-based multi-view album generation method and an image-optimization-based model texture generation method. The Depth2Image-based multi-view album generation method is responsible for generating observed images of a three-dimensional model at different angles based on a text prompt given by a user. The obtained observed images at the different angles are consistent on the whole, but local details may be different. To reduce the impact of this difference on texture generation, the image-optimization-based model texture generation method based is further provided, to obtain a model texture that is more visually harmonious.

In some embodiments, FIG. 8 is a schematic diagram I of a principle of an object map generation method provided by an embodiment of this application. It is assumed that a given white model is $M_{raw}$. A multi-view album generation process is as follows: first standardizing the white model, and normalizing a data input by normalizing white model coordinates. First, a geometric center of the white model $M_{raw}$ is calculated. The geometric center refers to an average value coordinate of all vertex coordinates of $M_{raw}$. It is assumed that the coordinate is $V_{mean} = [X_{mean}, Y_{mean}, Z_{mean}]$. Then, the vertex coordinates of $M_{raw}$ are updated. It is assumed that $M_{raw}$ has N vertexes, and $V_i = [X_i, Y_i, Z_i]$ is its any vertex, so that a corresponding updated vertex coordinate is $V_i^*$. A calculation flow is as follows:

$$V_i^* = \left[ \frac{X_i - X_{mean}}{d_{max}} \cdot s, \frac{Y_i - Y_{mean}}{d_{max}} \cdot s, \frac{Z_i - Z_{mean}}{d_{max}} \cdot s \right] \tag{5}$$

$$d_{max} = \max\{d_1, d_2, \cdots, d_N\} \tag{2}$$

$$d_i = \sqrt{(X_i - X_{mean})^2 + (Y_i - Y_{mean})^2 + (Z_i - Z_{mean})^2} \tag{6}$$

where s = 0.8 is a scaling coefficient of normalized coordinates, and a standardized white model is denoted as $M_{norm}$; $d_i$ is configured for indicating a distance between vertex $V_i$ and the average value coordinate $V_{mean}$; $V_i^*$ is configured for indicating the standard position of the above-mentioned object part in the virtual scene; $\frac{X_i - X_{mean}}{d_{max}} \cdot s$ is configured for indicating an x-coordinate of the above-mentioned standard position in the virtual scene; $\frac{Y_i - Y_{mean}}{d_{max}} \cdot s$ is configured for indicating a y-coordinate of the above-mentioned standard position in the virtual scene; $\frac{Z_i - Z_{mean}}{d_{max}} \cdot s$ is configured for indicating a z-coordinate of the above-mentioned standard position in the virtual scene; $X_i$ is configured for indicating a horizontal axis component of a distance corresponding to the above-mentioned object part; $Y_i$ is configured for indicating a longitudinal axis component of a distance corresponding to the above-mentioned object part; $Z_i$ is configured for indicating a vertical axis component of a distance corresponding to the above-mentioned object part; $d_{max}$ is configured for indicating the reference distance; $X_{mean}$ is configured for indicating an x-coordinate of the above-mentioned central position; $Y_{mean}$ is configured for indicating a y-coordinate of the above-mentioned central position; and $Z_{mean}$ is configured for indicating a z-coordinate of the above-mentioned central position.

In some embodiments, referring to FIG. 8, for generation of a multi-vision depth album, depth maps of a plurality of views are calculated based on the standardized $M_{norm}$, and the depth maps of the plurality of views are concatenated into a complete multi-view depth album. First, R rendering views are determined, and a camera parameter list $\{C_1, C_2, \cdots, C_R\}$ corresponding to the rendering views is calculated. Then, a geometric center of $M_{norm}$ is used as an origin of coordinates, and a camera is rotated at a fixed spherical radius for three-dimensional model rendering, to obtain R depth maps $\{D_1, D_2, \cdots, D_R\}$. Next, effective regions (image regions with depth values greater than 0) of the depth maps in all views are extracted and concatenated into a multi-view depth album $A_{Depth}$. For depth map $D_r$, its effective region is marked in this embodiment of this application by using five parameters $D_r^o = (r, U_r, V_r, W_r, H_r)$, where r represents an index of the corresponding depth map; $U_r, V_r$ represents a start position of the effective region in $D_r$; and $W_r, H_r$ represents a length and width of an effective region bounding box.

In some embodiments, referring to FIG. 8, for generation of a multi-view album, the corresponding multi-view album is calculated based on the multi-view depth album $A_{Depth}$ in the previous operation. It is assumed that a trained Depth2Image model is $f_{D2I}$, the generated multi-view album may be represented as $A_{Image}$:

$$A_{Image} = f_{D2I}(A_{Depth}, prompt) \tag{7}$$

where prompt represents the text prompt that is entered by the user and is configured for controlling the generation of the multi-view album.

In some embodiments, referring to FIG. 8, for restoration of a multi-view image, the generated multi-view album $A_{Image}$ is divided to obtain images with the same resolution in the rendering views. Images corresponding to the effective regions of the depth maps in the views are segmented from the multi-view album, and the effective regions of the corresponding depth maps are replaced, so that a corresponding multi-view image list $\{I_1', I_2', \cdots, I_R'\}$ may be obtained, and $I_r$ corresponds to depth map $D_r$.

In some embodiments, referring to FIG. 8, for upsampling of multi-view images, resolutions of the multi-view images are increased, to improve model texture generation quality. It is assumed that an image super resolution network is $f_{super}$, and then the multi-view-of-angle images with increased resolutions are $\{I_1, I_2, \cdots, I_R\}$. There is:

$$I_r = f_{super}(I_r') \tag{8}$$

In some embodiments, for training of a multi-view album generation network, data training is performed: first, a batch of three-dimensional models with textures are collected; then a white model is standardized, and camera parameters $\{C_1, C_2, \cdots, C_R\}$ are used to perform model rendering to obtain depth maps and rendered images of the corresponding views, and the corresponding multi-view depth map and the multi-view album are obtained based on the depth maps and the rendered images that are obtained through rendering; and next, a contrastive language-image pre-training (CLIP) technology is used to extract a text description of the rendered images, and a manual review manner is used to ensure accuracy of the text description. Therefore, for each three-dimensional model $M_i$, the following triple information can be obtained:

$$\mathrm{TrainSample}_i = (\mathrm{A}^i_{\mathrm{depth}}, \mathrm{A}^i_{\mathrm{Image}}, \mathrm{prompt}^i) \tag{9}$$

where $\mathrm{TrainSample}_i$ represents training sample data obtained from $M_i$; $\mathrm{A}^i_{\mathrm{depth}}$ represents the multi-view depth album; $\mathrm{A}^i_{\mathrm{Image}}$ represents the multi-view album; and $\mathrm{prompt}^i$ represents the corresponding text prompt.

In some embodiments, for a training policy, in this embodiment of this application, the multi-view album is generated based on a Diffusion-based Depth2Image neural network model. Therefore, during training, to fully use an image generation capability of an original network model, a low-rank adaptation (LORA)-based network fine-adjustment solution is used in this embodiment of this application, to quickly train the neural network model $f_{D2I}$ that generates the multi-view album based on the multi-view depth map.

In some embodiments, FIG. 9 is a schematic diagram of a principle of an object map generation method provided by an embodiment of this application. After a multi-view image set $\{I_1, I_2, \cdots, I_R\}$ and its corresponding camera parameters $\{C_1, C_2, \cdots, C_R\}$ are obtained, an undirected graph model is constructed based on a Markov random field model; an appropriate texture image source is determined for each triangle on the white model; and an initial texture map is generated. Then, the initial texture map is optimized to improve overall map quality. The object map generation method provided by this embodiment of this application may implement image-optimization-based model texture generation through operation 201 to operation 203 shown in FIG. 9. The following respectively describes operation 201 to operation 203.

In operation 201, an undirected graph for selecting an initial texture is constructed.

In some embodiments, FIG. 10 is a schematic diagram of a principle of an undirected graph provided by an embodiment of this application. The undirected graph required for selecting an initial texture is constructed. Each triangle $F_k$ in a white model is regarded as a vertex of the undirected graph, and all vertexes are represented as a set $V_1$; each triangle having the same edge as $F_k$ is independently formed into one edge; and all edges are represented as a set $\Phi_1$. The white model in FIG. 10 is used as an example. The white model includes triangle F1, triangle F3, triangle Fk, and triangle F2, which respectively correspond to vertex F1, vertex F3, vertex Fk, and vertex F2 in the undirected graph corresponding to the white model.

In operation 202, image-optimization-based initial texture selection is performed.

In some embodiments, by the image-optimization-based initial texture selection, Markov random field energy is constructed and minimized to obtain initial texture information. First, a label is assigned to each image in the multi-view image set. It is assumed that image $I_i$ corresponds to label $l_i$. First, a Markov random field is constructed, and its energy is represented as $E(l)$:

$$E(l) = \sum_{F_k \in V_1} E_{\mathrm{data}}(F_k, l_i) + \sum_{(F_k, F_j) \in \Phi_1} E_{\mathrm{smooth}}(F_k, F_j, l_i, l_j) \tag{10}$$

where $E_{\mathrm{data}}(F_k, l_i)$ represents energy required for assigning label $l_i$ to triangle $F_k$; and $E_{\mathrm{smooth}}(F_k, F_j, l_k, l_j)$ represents energy required for assigning label $l_i$ to triangle $F_k$ and assigning label $l_j$ to triangle $F_j$.

In some embodiments, a definition of $E_{\mathrm{data}}(F_k, l_i)$ is as follows:

$$E_{\mathrm{data}}(F_k, l_i) = \exp\left(-\mathrm{Area}(F_k, I_i, C_i)\right) \tag{11}$$

where $\mathrm{Area}(F_k, I_i, C_i)$ represents a projection area of triangle $F_k$ on image $I_i$ through camera $C_i$, and exp represents an exponential function using natural constant e as a base.

In some embodiments, $E_{\mathrm{smooth}}(F_k, F_j, l_k, l_j)$ is defined by using a Potts model.

$$E_{\mathrm{smooth}}\left(F_k, F_j, l_k, l_j\right) = \left[l_k \neq l_j\right] \tag{12}$$

where [·] is an Iverson Bracket. Then, energy E(I) is minimized by using a multi-label image segmentation algorithm, so that a solving result can be obtained. To be specific, a most appropriate label is selected for each triangle $F_k$ of the white model, namely, a most appropriate texture source. In this way, the initial texture of the white model can be obtained.

In operation 203, the initial texture is optimized.

In some embodiments, texture quality of the white model is improved. After the initial texture of the white model is obtained, if the textures of adjacent triangles of the model come from images in different views, there may be a problem of visual cracks. In this embodiment of this application, such triangles are referred to as edge triangles, and a common edge of the triangles is referred to as a very edge.

To solve the problem, in this embodiment of this application, colors of vertexes at two ends of the very edge are entirely optimized. First, the vertex of each very edge is split, and any vertex $v^i$ of the very edge is split into $v_{\text{left}}^i$ and $v_{\text{right}}^i$; the vertexes of all very edges are represented as a set $V_2$; and all the very edges are represented as a set $\Phi_2$. Then, the following formula is constructed to optimize the texture:

$$f(\Delta) = \text{argmin}_\Delta \sum_{v^i \in V_2} \left( \left( C_{v_{\text{left}}^i} + \delta_{v_{\text{left}}^i} \right) - \left( C_{v_{\text{right}}^i} + \delta_{v_{\text{right}}^i} \right) \right)^2 + \sum_{(v^i,v^j) \in \Phi_2} \left( \delta_{v^i} - \delta_{v^j} \right)^2 \quad (13)$$

where $C_{v_{\text{left}}^i}$ and $C_{v_{\text{right}}^i}$ respectively represent color values of the split vertexes $v_{\text{left}}^i$ and $v_{\text{right}}^i$; $\delta_{v_{\text{left}}^i}$ and $\delta_{v_{\text{right}}^i}$ respectively represent color variations of the split vertexes $v_{\text{left}}^i$ and $v_{\text{right}}^i$; $\delta_{v_i}$ and $\delta_{v_j}$ respectively represent color variations of the vertexes $v_i$ and $v_j$ at the two ends of the very edge; and $\Delta$ represents a parameter set composed of to-be-optimized color variations. For any edge vertex $v_i$, a calculation rule for its color variation is as follows:

$$\delta_{v^i} = \frac{w_0 \cdot \delta_{v_0^i} + w_1 \cdot \delta_{v_1^i} + \cdots + w_{N_i} \cdot \delta_{v_{N_i}^i}}{w_0 + w_1 + \cdots + w_{N_i}} \quad (14)$$

where $\delta_{v_0^i}$, $\delta_{v_1^i}$, $\cdots$, and $\delta_{v_{N_i}^i}$ represent color variations of all vertexes obtained by splitting vertex $v_i$; $w_0$, $w_1$, $\cdots$, and $w_{N_i}$ represent areas of triangles in which split vertexes with corresponding serial numbers; and $N_i$ represents a maximum value of the serial numbers of all the vertexes obtained by splitting $v_i$. $f(\Delta)$ may be converted into a large linear system and is solved by using a conjugate gradient method. After the texture optimization is completed, the color values of the corresponding vertexes are updated into a texture image, so that a final texture map asset of the corresponding white model can be obtained.

In this way, the texture of the white model is automatically generated: a user only needs to provide a text description of a texture of a target model, to generate the corresponding texture map for the white model. Therefore, the user can obtain a large number of selectable model texture maps without complex operation processes such as UV unwrapping on the white model. A model texture generation speed is high: during application of this embodiment of this application, the multi-view album generation stage only involves an efficient neural network inference process. Since the multi-label image segmentation algorithm and the conjugate gradient method on which the texture generation stage depends have high solving speed and are stable. Therefore, the model texture generation speed is high, and a target texture map of the white template can be quickly obtained. Diversified texture maps can be generated: in this embodiment of this application, the diversified texture maps can be generated based on a text prompt given by the user. This can meet different requirements of different users.

In this way, a plurality of initial object maps of a virtual object and adjustment description text are obtained; a virtual camera is controlled to capture the virtual object at a plurality of different capturing angles, to obtain captured images respectively corresponding to the capturing angles; image adjustment is respectively performed on the captured images based on the adjustment description text, to obtain reference images corresponding to the captured images; target reference images respectively corresponding to the initial object maps are selected from the reference images; and target maps satisfying the preset adjustment effect are generated based on the target reference images and the initial object maps. In this way, since there is at least one initial object map of the virtual object that is acquired from the captured images that are obtained by capturing the virtual object and respectively correspond to the capturing angles, the image adjustment is respectively performed on the captured images, and the obtained reference images can implement the content adjust on the at least one initial object map corresponding to the captured images. The at least one initial object map can be adjusted based on the reference image corresponding to each initial object map, namely, the target map generated based on each target reference image. Therefore, the image adjustment does not need to be performed on each initial object map, but only needs to be respectively performed on the captured images. In this way, all initial object maps can be adjusted, thereby effectively reducing a number of times of image adjustment. Meanwhile, the generated target object maps can satisfy the preset adjustment effect, thereby effectively improving object map generation efficiency.

Data related to the initial object maps of the virtual object in this embodiment of this application is involved. When this embodiment of this application is applied to a specific product or a technology, it is necessary to obtain user's permission or consent, and the acquisition, use, and processing of the related data need to comply with relevant laws, regulations, and standards of relevant countries and regions.

The following continues to describe an exemplary structure in which an object map generation apparatus 455 provided by an embodiment of this application is implemented as a software module. In some embodiments, as shown in FIG. 2, the software module in the object map generation apparatus 455 stored in the memory 450 may include: an obtaining module 4551, configured to: obtain a plurality of initial object maps of a virtual object and adjustment description text for describing a preset adjustment effect on the virtual object, the initial object maps being minimum units of surface maps that constitute the virtual object; a capturing module 4552, configured to obtain a plurality of initial object maps of a virtual object and adjustment description text for describing a preset adjustment effect on the virtual object, the initial object maps being minimum units of surface maps that constitute the virtual object; an adjustment module 4553, configured to respectively perform image adjustment on the captured images based on the adjustment description text, to obtain reference images corresponding to the captured images, the reference images satisfying the preset adjustment effect; a selection module 4554, configured to select, from the reference images, target reference images respectively corresponding to the initial object maps, the virtual camera being capable of obtaining the corresponding initial object maps at the capturing angles corresponding to the target reference images; and a generation module 4555, configured to generate, based on the target reference images and the initial object maps, target object maps satisfying the preset adjustment effect.

In some embodiments, the capturing module is further configured to: obtain a central position, in a virtual scene, of a geometric center of the virtual object, and perform standardization processing on the virtual object in the virtual scene based on the central position, to obtain a target virtual object; and control the virtual camera to capture the target virtual object at the plurality of different capturing angles, to obtain the captured images respectively corresponding to the capturing angles.

In some embodiments, the capturing module is further configured to: determine, in the virtual scene, a plurality of capturing positions that are away from the central position by a distance equal to a target distance, the capturing angles and the capturing positions being in one-to-one correspondence; and control, for each capturing position, the virtual camera to: be located at the capturing position, face the target virtual object, and capture the target virtual object, to obtain the captured image corresponding to the corresponding capturing angle.

In some embodiments, the capturing module is further configured to: obtain positions of a plurality of object parts of the virtual object respectively in the virtual scene, determine distances between the positions and the central position, and determine a maximum distance as a reference distance; and perform the following processing on each object part of the virtual object, to obtain the target virtual object: dividing the distance corresponding to the object part by the reference distance, to obtain a standard position of the object part in the virtual scene; and adjusting the position of the object part to the standard position.

In some embodiments, the adjustment module is further configured to: invoke an image adjustment network, and perform image content adjustment on the captured images based on the adjustment description text to obtain candidate images respectively corresponding to the captured images, the candidate images satisfying the preset adjustment effect described by the adjustment description text; and perform super resolution processing on the candidate images to obtain the reference images respectively corresponding to the candidate images.

In some embodiments, the object map generation apparatus further includes: a training module, configured to: obtain an initial image adjustment network, and obtain an adjustment description text sample, a label image, and a captured image sample, the label image satisfying a preset adjustment effect described by the text sample; invoke the initial image adjustment network, and perform image content adjustment on the captured image sample based on the adjustment description text sample, to obtain an adjusted image corresponding to the captured image sample; and determine a loss value of the initial image adjustment network based on the adjusted image and the label image, and train the initial image adjustment network based on the loss value, to obtain the image adjustment network.

In some embodiments, the selection module is further configured to obtain reference capturing positions respectively corresponding to the reference images, the reference capturing positions being configured for indicating positions of the virtual camera in the virtual scene during capturing of the captured images corresponding to the reference images; and perform the following processing on each initial object map: determining, for each reference image, the reference image as the candidate image of the initial object map based on the reference capturing position corresponding to the reference image and the initial object map when it is determined that the virtual camera is capable of obtaining the initial object map at the capturing angle corresponding to the reference image; and determining the target reference image corresponding to the initial object map from the candidate image of the initial object map.

In some embodiments, the selection module is further configured to: obtain a texturing position of the initial object map in the virtual scene, and connecting the texturing position to the reference capturing position in the virtual scene, to obtain a virtual detection line; determine, when the virtual detection line does not pass through another initial object map in the virtual scene, that the virtual camera is capable of obtaining the initial object map at the capturing angle corresponding to the reference image; and determine, when the virtual detection line passes through another initial object map in the virtual scene, that the virtual camera is not capable of obtaining the initial object map at the capturing angle corresponding to the reference image.

In some embodiments, the selection module is further configured to: determine, when there is one candidate image for the initial object map, the candidate image as the target reference image corresponding to the initial object map; determine a degree of association between the initial object map and each candidate image when there are a plurality of candidate images for the initial object map; and determine a candidate image corresponding to a maximum degree of association as the target reference image corresponding to the initial object map.

In some embodiments, the selection module is further configured to: determine an adjacency object map of the initial object map from the plurality of initial object maps of the virtual object, and perform the following processing on each candidate image: determining a first degree of association of the candidate image based on the adjacency object map and the candidate image; determining an imaging region of the initial object map in the candidate image, and determining a second degree of association of the candidate image based on an area of the imaging region, a value of the second degree of association being positively correlated to the area of the imaging region; and summing the first degree of association and the second degree of association, to obtain the degree of association between the initial object map and the candidate image.

In some embodiments, the selection module is further configured to: determine the first degree of association of the candidate image as a first value when the candidate image is a candidate image of the adjacency object map, the first value being a non-zero constant; and determine the first degree of association of the candidate image as a second value when the candidate image is not the candidate image of the adjacency object map, the second value being equal to zero.

In some embodiments, the generation module is further configured to perform the following processing on each initial object map: determining an imaging region of the initial object map in the target reference image from the target reference image corresponding to the initial object map; adjusting image content of the initial object map into image content of the imaging region in the target reference image, to obtain a candidate map corresponding to the initial object map; determining an adjacency object map of the initial object map from the plurality of initial object maps of the virtual object; and performing smoothing processing on the candidate map corresponding to the initial object map based on the candidate map corresponding to the adjacency object map, to obtain the target object map corresponding to the initial object map.

In some embodiments, the generation module is further configured to perform the following processing on each pixel in the candidate map corresponding to the initial object map to obtain the target object map: determining the pixel as a to-be-smoothed pixel when a minimum distance between the pixel and the candidate map corresponding to the adjacency object maps is less than a distance threshold; determining, from pixels of the candidate map corresponding to the adjacency object map, a reference pixel closest to the to-be-smoothed pixel; averaging a color value of the reference pixel and a color value of the to-be-smoothed pixel to obtain an average color value; and adjusting the color value of the to-be-smoothed pixel into the average color value.

In some embodiments, the adjustment module is further configured to: invoke an encoding layer and perform image content encoding on the captured images based on the adjustment description text, to obtain image features respectively corresponding to the captured images; and invoke a decoding layer and perform image content adjustment on the captured images based on the image features, to obtain the candidate images respectively corresponding to the captured images.

In some embodiments, the generation module is further configured to respectively replace the initial object maps on the virtual object with the corresponding target object maps, to obtain a target virtual object, the target virtual object satisfying the preset adjustment effect.

In some embodiments, the obtaining module is further configured to generate, in response to an editing operation on the adjustment description text, the adjustment description text for describing the preset adjustment effect on the virtual object.

An embodiment of this application provides a computer program product. The computer program product includes a computer program or a computer-executable instruction. The computer program or computer-executable instruction is stored in a computer-readable storage medium. A processor of an electronic device reads the computer-executable instruction from the computer-readable storage medium, and the processor executes the computer-executable instruction, to cause the electronic device to perform the above object map generation method according to the embodiments of this application.

An embodiment of this application provides a computer-readable storage medium, having a computer-executable instruction stored therein, having a computer-executable instruction stored therein. The computer-executable instruction, when executed by a processor, causes the processor to perform the object map generation method provided by this embodiment of this application, for example, the object map generation method shown in FIG. 3.

In some embodiments, the computer-readable storage medium may be a memory such as a read-only memory (ROM), a random access memory (RAM), an erasable programmable read-only memory (EPROM), a flash memory, a magnetic surface memory, an optical disc, or a compact disc (CD)-ROM, or may be one of the above memories or any combined electronic device.

In some embodiments, the computer-executable instructions may be written in the form of program, software, software module, script, or code in any form of programming language (including compilation or interpretation language, or declarative or procedural language), and the computer executable instructions may be deployed in any form, including being deployed as an independent program or being deployed as a module, component, subroutine, or another unit suitable for use in a computing environment.

In the embodiments of this application, a term "module" or "unit" refers to a computer program having a predetermined function or a part of a computer program, and operates together with other relevant parts to achieve a predetermined objective, and may be all or partially implemented by using software, hardware (such as a processing circuit or a memory), or a combination thereof. Similarly, one processor (or a plurality of processors or memories) may be configured to implement one or more modules or units. In addition, each module or unit may be a part of an overall module or unit including a function of the module or unit.

In an example, the computer-executable instructions may but do not necessarily correspond to a file in a file system, and may be stored as a part of a file that saves other programs or data, for example, stored in one or more scripts in a Hypertext Markup Language (HTML) document, stored in a single file dedicated to a discussed program, or stored in a plurality of collaborative files (for example, files that store one or more modules, subprograms, or code parts).

As an example, the computer-executable instruction may be deployed to be executed on one electronic device, on a plurality of electronic devices located at one site, or on a plurality of electronic devices distributed at a plurality of locations and connected by a communication network.

In summary, the embodiments of this application have the following beneficial effects.

(1) A plurality of initial object maps of a virtual object and adjustment description text are obtained; a virtual camera is controlled to capture the virtual object at a plurality of different capturing angles, to obtain captured images respectively corresponding to the capturing angles; image adjustment is respectively performed on the captured images based on the adjustment description text, to obtain reference images corresponding to the captured images; target reference images respectively corresponding to the initial object maps are selected from the reference images; and target maps satisfying the preset adjustment effect are generated based on the target reference images and the initial object maps. In this way, since there is at least one initial object map of the virtual object that is acquired from the captured images that are obtained by capturing the virtual object and respectively correspond to the capturing angles, the image adjustment is respectively performed on the captured images, and the obtained reference images can implement the content adjust on the at least one initial object map corresponding to the captured images. The at least one initial object map can be adjusted based on the reference image corresponding to each initial object map, namely, the target map generated based on each target reference image. Therefore, the image adjustment does not need to be performed on each initial object map, but only needs to be respectively performed on the captured images. In this way, all initial object maps can be adjusted, thereby effectively reducing a number of times of image adjustment. Meanwhile, the generated target object maps can satisfy the preset adjustment effect, thereby effectively improving object map generation efficiency.

(2) The above standardization processing refers to a processing process of obtaining a standardized target virtual object by standardizing the virtual object. Different object parts of the virtual object may have bulges, causing an uneven surface of the virtual object. Bulge parts easily cause visual occlusion on recess parts. Consequently, the recess parts of the virtual object cannot be accurately acquired from subsequently acquired captured images. In this way, to make the subsequently acquired captured images completer and more comprehensive, the standardization processing is performed on the virtual object, so that the recess parts before the standardization processing can be accurately acquired from the subsequently acquired captured images, and the acquired captured images can accurately and comprehensively describe the virtual object at the corresponding capturing angles.

(3) When there are the plurality of candidate images for the initial object map, the candidate image corresponding to the maximum degree of association is determined as the target reference image corresponding to the initial object map. Since the degree of association can accurately reflect an association relationship between the candidate image and the initial object map, the candidate image with the highest association is determined as the target reference image of the initial object map, so that the target object map of the initial object map that is subsequently determined based on the candidate image can accurately express the preset adjustment effect, and the obtained target object map is more accurate.

(4) By performing the super resolution processing on the candidate images to obtain the reference images respectively corresponding to the candidate images, the image resolutions of the candidate images can be significantly improved when the image content of the original candidate images remains unchanged, thereby effectively improving image quality of the candidate images and enabling the reference images to more clearly and accurately reflect the virtual object.

(5) The smoothing processing refers to adjusting a color value of the candidate map, to cause a color difference between the candidate map corresponding to the initial object map and the candidate map of the adjacency object map approaches to be stable, so that map distortion caused by a large color difference is avoided, thereby effectively improving stability of a color value of the target object map.

(6) The texture of the white model is automatically generated: a user only needs to provide a text description of a texture of a target model to generate the corresponding texture map for the white model. Therefore, the user can obtain a large number of selectable model texture maps without complex operation processes such as UV unwrapping on the white model. A model texture generation speed is high: during application of this embodiment of this application, the multi-view album generation stage only involves an efficient neural network inference process. Since the multi-label image segmentation algorithm and the conjugate gradient method on which the texture generation stage depends have high solving speed and are stable. Therefore, the model texture generation speed is high, and a target texture map of the white template can be quickly obtained. Diversified texture maps can be generated: in this embodiment of this application, the diversified texture maps can be generated based on a text prompt given by the user. This can meet different requirements of different users.

(7) The intention of adjusting the virtual object may be definitely conveyed based on the adjustment description text. This is conductive to ensuring that the adjustment on the virtual object can meet a design requirement and a user expectation. In actual application, the adjustment description text may exist in a form of a programming interface invoking parameter, a configuration file, a user input instruction, and the like, and is configured for instructing a rendering and interaction process of the virtual object.

(8) A virtual scene is created, which includes a virtual object that a user intends to capture. A plurality of capturing angles are determined. These angles may be fixed predefined positions, or may be dynamically calculated based on specific requirements. For example, the following capturing angles may be defined: a front view: in which the camera directly faces the object; a side view: in which the camera is located on a side of the object; a top view: in which the camera is located right above the object; and an oblique view: in which the camera is located at a corner of the object, forming an oblique viewing effect. For each capturing angle, a position and direction of the virtual camera are set. The scene is rendered by using a rendering function of the virtual engine. During rendering, the virtual engine calculates illumination, shadow, and a view of a scene based on the position and direction of the camera. After the rendering is completed, an image representing a particular capturing angle may be obtained. The image may be 2D or 3D based on a capability of the virtual engine and complexity of the scene. The obtained captured image at each angle is stored for subsequent use. These images may be configured for various purposes, such as virtual reality application, animation production, and game development. In this way, the captured images of the virtual object may be obtained from the plurality of angles, and each image reflects a view of the virtual camera in a particular angle. These images may be configured for creating a dynamic visual effect to enhance immersion of a user in a virtual environment.

(9) Precise placement and positioning of the virtual object may be implemented by obtaining the positions of the parts of the virtual object in the virtual scene, to ensure that a spatial relationship of the virtual object in a virtual environment conforms to an expectation. By calculating the distance between each part and the central position and determining the maximum distance as the reference distance, a uniform reference can be provided for subsequent position adjustment. By dividing the position distance of each part by the reference distance, original position information may be converted into scale information. In this way, position relationships of the parts can be kept consistent even in virtual scenes with different sizes. By adjusting the positions of the parts to a reference-distance-based standard position, the virtual object can be more visually balanced and harmonious, thereby improving overall aesthetics. It can adapt to different virtual environments. Since the adjustment is performed based on a distance scale, consistency of the objects can be maintained in different scenes as long as consistency of the reference distances is ensured.

The foregoing descriptions are merely embodiments of this application and are not intended to limit the protection scope of this application. Any modification, equivalent replacement, or improvement made within the spirit and scope of this application fall within the protection scope of this application.

**Claims**

1. An object map generation method, comprising:

   obtaining a plurality of initial object maps of a virtual object and an adjustment description text indicating a preset adjustment effect for the virtual object, the plurality of initial object maps forming a surface map of the virtual object;
   controlling a virtual camera to capture the virtual object at a plurality of capturing angles, to obtain captured images respectively corresponding to the capturing angles;
   respectively performing image adjustment on the captured images based on the adjustment description text, to obtain reference images corresponding to the preset adjustment effect;
   selecting, from the reference images, target reference images respectively corresponding to the initial object maps; and
   generating, based on the target reference images and the initial object maps, target object maps satisfying the preset adjustment effect.

2. The method according to claim 1, wherein the controlling a virtual camera to capture the virtual object at a plurality of capturing angles, to obtain captured images respectively corresponding to the capturing angles comprises:

   obtaining a central position of a geometric center of the virtual object in a virtual scene;
   performing standardization processing on the virtual object in the virtual scene based on the central position, to obtain a target virtual object; and
   controlling the virtual camera to capture the target virtual object at the plurality of different capturing angles, to obtain the captured images.

3. The method according to claim 1 or 2, wherein the controlling the virtual camera to capture the target virtual object at the plurality of capturing angles, to obtain the captured images respectively corresponding to the capturing angles comprises:

   determining, in the virtual scene, a plurality of capturing positions that are away from the central position by a target distance, the capturing angles and the capturing positions being in one-to-one correspondence; and
   for each capturing position, arranging the virtual camera located at the capturing position to face the target virtual object and capture an image of the target virtual object at a corresponding capturing angle.

4. The method according to claim 1 or 2, wherein the performing standardization processing on the virtual object in the virtual scene based on the central position, to obtain a target virtual object comprises:

   obtaining positions of a plurality of object parts of the virtual object respectively in the virtual scene;
   determining distances between the positions of the plurality of object parts and the central position, and determining a maximum distance among the distances as a reference distance; and
   performing the following processing on each object part of the virtual object, to obtain the target virtual object:

      dividing the distance corresponding to the object part by the reference distance, to obtain a standard position of the object part in the virtual scene; and
      adjusting the position of the object part to the standard position.

5. The method according to claim 1, wherein the respectively performing image adjustment on the captured images based on the adjustment description text, to obtain reference images corresponding to the preset adjustment effect comprises:

   performing image content adjustment on the captured images based on the adjustment description text using an image adjustment network to obtain candidate images respectively corresponding to the captured images, the candidate images satisfying the preset adjustment effect described by the adjustment description text; and performing super resolution processing on the candidate images to obtain the reference images respectively corresponding to the candidate images.

6. The method according to claim 5, further comprising:

obtaining an initial image adjustment network, and obtaining an adjustment description text sample, a label image, and a captured image sample, the label image satisfying a preset adjustment effect described by the text sample;

performing image content adjustment on the captured image sample based on the adjustment description text sample using the initial image adjustment network, to obtain an adjusted image corresponding to the captured image sample; and

determining a loss value of the initial image adjustment network based on the adjusted image and the label image, and training the initial image adjustment network based on the loss value, to obtain the image adjustment network.

7. The method according to claim 5, wherein the image adjustment network comprises an encoding layer and a decoding layer; and the performing image content adjustment on the captured images based on the adjustment description text using the image adjustment network to obtain candidate images respectively corresponding to the captured images comprises:

invoking the encoding layer, and performing image content encoding on the captured images based on the adjustment description text, to obtain image features respectively corresponding to the captured images; and invoking the decoding layer, and performing image content adjustment on the captured images based on the image features, to obtain the candidate images respectively corresponding to the captured images.

8. The method according to claim 1, wherein the selecting, from the reference images, target reference images respectively corresponding to the initial object maps comprises:

obtaining reference capturing positions respectively corresponding to the reference images, the reference capturing positions indicating positions of the virtual camera in the virtual scene during capturing of the captured images corresponding to the reference images; and performing the following processing on each initial object map:

determining, for each reference image, the reference image as the candidate image of the initial object map based on the reference capturing position corresponding to the reference image and the initial object map when it is determined that the virtual camera is capable of obtaining the initial object map at the capturing angle corresponding to the reference image; and

determining the target reference image corresponding to the initial object map from the candidate image of the initial object map.

9. The method according to claim 8, further comprising:

obtaining a texturing position of the initial object map in the virtual scene, and connecting the texturing position to the reference capturing position in the virtual scene, to obtain a virtual detection line; determining, when the virtual detection line does not pass through another initial object map in the virtual scene, that the virtual camera is capable of obtaining the initial object map at the capturing angle corresponding to the reference image; and

determining, when the virtual detection line passes through another initial object map in the virtual scene, that the virtual camera is not capable of obtaining the initial object map at the capturing angle corresponding to the reference image.

10. The method according to claim 8, wherein the determining the target reference image corresponding to the initial object map from the candidate image of the initial object map comprises:

determining, when there is one candidate image for the initial object map, the candidate image as the target reference image corresponding to the initial object map; determining a degree of association between the initial object map and each candidate image when there are a plurality of candidate images for the initial object map; and
determining a candidate image corresponding to a maximum degree of association as the target reference image corresponding to the initial object map.

11. The method according to any one of claims 8 to 10, wherein the determining a degree of association between the initial object map and each candidate image comprises:
determining an adjacency object map of the initial object map from the plurality of initial object maps of the virtual object, and performing the following processing on each candidate image:

determining a first degree of association of the candidate image based on the adjacency object map and the candidate image;
determining an imaging region of the initial object map in the candidate image, and determining a second degree of association of the candidate image based on an area of the imaging region, a value of the second degree of association being positively correlated to the area of the imaging region; and
summing the first degree of association and the second degree of association, to obtain the degree of association between the initial object map and the candidate image.

12. The method according to any one of claims 8 to 11, wherein the determining a first degree of association of the candidate image based on the adjacency object map and the candidate image comprises:

determining the first degree of association of the candidate image as a first value when the candidate image is a candidate image of the adjacency object map, the first value being a non-zero constant; and
determining the first degree of association of the candidate image as a second value when the candidate image is not the candidate image of the adjacency object map, the second value being equal to zero.

13. The method according to claim 1, wherein the generating, based on the target reference images and the initial object maps, target object maps satisfying the preset adjustment effect comprises:
performing the following processing on each initial object map:

determining an imaging region of the initial object map in the target reference image from the target reference image corresponding to the initial object map;
adjusting image content of the initial object map into image content of the imaging region in the target reference image, to obtain a candidate map corresponding to the initial object map;
determining an adjacency object map of the initial object map from the plurality of initial object maps of the virtual object; and
performing smoothing processing on the candidate map corresponding to the initial object map based on the candidate map corresponding to the adjacency object map, to obtain the target object map corresponding to the initial object map.

14. The method according to claim 13, wherein the performing smoothing processing on the candidate map corresponding to the initial object map based on the candidate map corresponding to the adjacency object map, to obtain the target object map corresponding to the initial object map comprises:
performing the following processing on each pixel in the candidate map corresponding to the initial object map to obtain the target object map:

determining the pixel as a to-be-smoothed pixel when a minimum distance between the pixel and the candidate map corresponding to the adjacency object maps is less than a distance threshold;
determining, from pixels of the candidate map corresponding to the adjacency object map, a reference pixel closest to the to-be-smoothed pixel;
averaging a color value of the reference pixel and a color value of the to-be-smoothed pixel to obtain an average color value; and
adjusting the color value of the to-be-smoothed pixel into the average color value.

15. The method according to claim 1, wherein after the generating, based on the target reference images and the initial object maps, target object maps satisfying the preset adjustment effect, the method further comprises:
respectively replacing the initial object maps on the virtual object with the corresponding target object maps, to obtain a target virtual object satisfying the preset adjustment effect.

16. The method according to claim 1, wherein the obtaining adjustment description text for describing a preset adjustment effect on the virtual object comprises:
generating, in response to an editing operation on the adjustment description text, the adjustment description text for describing the preset adjustment effect on the virtual object.

17. An object map generation apparatus, comprising:

an obtaining module, configured to: obtain a plurality of initial object maps of a virtual object and an adjustment description text indicating a preset adjustment effect for the virtual object, the plurality of initial object maps forming a surface map of the virtual object;
a capturing module, configured to control a virtual camera to capture the virtual object at a plurality of capturing angles, to obtain captured images respectively corresponding to the capturing angles;
an adjustment module, configured to respectively perform image adjustment on the captured images based on the adjustment description text, to obtain reference images corresponding to the preset adjustment effect;
a selection module, configured to select, from the reference images, target reference images respectively corresponding to the initial object maps; and
a generation module, configured to generate, based on the target reference images and the initial object maps, target object maps satisfying the preset adjustment effect.

18. An electronic device, comprising:

a memory, configured to store a computer-executable instruction or a computer program; and
a processor, configured to implement, when executing the computer-executable instruction or the computer program stored in the memory, the object map generation method according to any one of claims 1 to 16.

19. A computer-readable storage medium, having a computer-readable instruction stored therein, the computer-readable instruction, when executed by a processor, implementing the object map generation method according to any one of claims 1 to 16.

20. A computer program product, comprising a computer program or a computer-executable instruction, the computer program or the computer-executable instruction, when executed by a processor, implementing the object map generation method according to any one of claims 1 to 16.

100

Server 200

Network 300

400

410-1

410

App

## FIG. 1

Electronic device 500

Memory 450

| Operating system 451 |
|---|
| Network communication module 452 |
| Object map generation apparatus 455 |

Network interface 420

Processor 430

440

| Obtaining module 4551 |
|---|
| Photographing module 4552 |
| Adjustment module 4553 |
| Selection module 4554 |
| Generation module 4555 |

## FIG. 2

| Obtain a plurality of initial object maps of a virtual object, and obtain adjustment description text for describing a preset adjustment effect on the virtual object | 101 |

↓

| Control a virtual camera to capture the virtual object at a plurality of different capturing angles, to obtain captured images respectively corresponding to the capturing angles | 102 |

↓

| Respectively perform image adjustment on the captured images based on the adjustment description text, to obtain reference images corresponding to the captured images | 103 |

↓

| Select, from the reference images, target reference images respectively corresponding to the initial object maps | 104 |

↓

| Generate, based on the target reference images and the initial object maps, target object maps satisfying the preset adjustment effect | 105 |

## FIG. 3

Control a virtual camera to capture the virtual object at a plurality of different capturing angles, to obtain captured images respectively corresponding to the capturing angles — 102

> Obtain a central position of a geometric center of the virtual object in the virtual scene — 1021

↓

> Perform standardization processing on the virtual object in the virtual scene based on the central position, to obtain a target virtual object — 1022

↓

> Control the virtual camera to capture the target virtual object at the plurality of different capturing angles, to obtain the captured images respectively corresponding to the capturing angles — 1023

## FIG. 4

Respectively perform image adjustment on the captured images based on the adjustment description text, to obtain reference images corresponding to the captured images

> Invoke an image adjustment network, and perform image content adjustment on the captured images based on the adjustment description text to obtain candidate images respectively corresponding to the captured images ⌇ 1031

> Perform super resolution processing on the candidate images to obtain the reference images respectively corresponding to the candidate images ⌇ 1032

103

## FIG. 5

Select, from the reference images, target reference images respectively corresponding to the initial object maps

> Obtain reference capturing positions respectively corresponding to the reference images, and respectively perform operation 1042 to operation 1043 below on each initial object map ⌇ 1041

> Determine, for each reference image, the reference image as the candidate image of the initial object map based on the reference capturing position corresponding to the reference image and the initial object map when it is determined that the virtual camera is capable of obtaining the initial object map at the capturing angle corresponding to the reference image ⌇ 1042

> Determine the target reference image corresponding to the initial object map from the candidate image of the initial object map ⌇ 1043

104

## FIG. 6

Generate, based on the target reference images and the initial object maps, target object maps satisfying the preset adjustment effect — 105

Determine an imaging region of each initial object map in the target reference image from the target reference image corresponding to the initial object map — 1051

Adjust image content of the initial object map into image content of the imaging region in the target reference image, to obtain a candidate map corresponding to the initial object map — 1052

Determine an adjacency object map of the initial object map from the plurality of initial object maps of the virtual object — 1053

Perform smoothing processing on the candidate map corresponding to the initial object map based on the candidate map corresponding to the adjacency object map, to obtain the target object map corresponding to the initial object map — 1054

FIG. 7

FIG. 8

EP 4 742 172 A1

FIG. 9

White model
example

Undirected graph
example

FIG. 10

FIG. 11

## INTERNATIONAL SEARCH REPORT

| | International application No. |
|---|---|
| | **PCT/CN2024/108401** |

| A. | CLASSIFICATION OF SUBJECT MATTER |
|---|---|

G06T19/00(2011.01)i;  G06T19/20(2011.01)i

According to International Patent Classification (IPC) or to both national classification and IPC

| B. | FIELDS SEARCHED |
|---|---|

Minimum documentation searched (classification system followed by classification symbols)

    IPC:G06T

Documentation searched other than minimum documentation to the extent that such documents are included in the fields searched

Electronic data base consulted during the international search (name of data base and, where practicable, search terms used)

    VEN, CNABS, CNTXT, WOTXT, EPTXT, USTXT, CNKI, IEEE: 贴图, 纹理, 相机, 摄像头, 拍摄, 文字, 文本, 文档, 角度, 标准化, 位置, 距离, map, texture, camera, shot, word, text, document, angle, normalization, position, distance

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117237573 A (TENCENT TECHNOLOGY (SHENZHEN) CO., LTD.) 15 December 2023 (2023-12-15)<br>    claims 1-16, and description, paragraphs 0084, 0116, and 0161 | 1-20 |
| A | CN 116416358 A (NETEASE (HANGZHOU) NETWORK CO., LTD.) 11 July 2023 (2023-07-11)<br>    entire document | 1-20 |
| A | CN 110738723 A (SINOVATION VENTURES (BEIJING) ENTERPRISE MANAGEMENT CO., LTD.) 31 January 2020 (2020-01-31)<br>    entire document | 1-20 |
| A | CN 113592997 A (TENCENT TECHNOLOGY (SHENZHEN) CO., LTD.) 02 November 2021 (2021-11-02)<br>    entire document | 1-20 |
| A | CN 116485983 A (ALIBABA DAMO ACADEMY (HANGZHOU) TECHNOLOGY CO., LTD.) 25 July 2023 (2023-07-25)<br>    entire document | 1-20 |

☑ Further documents are listed in the continuation of Box C.      ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 October 2024** | **23 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/108401** |

### C.　DOCUMENTS CONSIDERED TO BE RELEVANT

| Category* | Citation of document, with indication, where appropriate, of the relevant passages | Relevant to claim No. |
| --- | --- | --- |
| A | KR 102537808 B1 (REBUILDERAI INC.) 31 May 2023 (2023-05-31)<br>entire document | 1-20 |

Form PCT/ISA/210 (second sheet) (July 2022)

**INTERNATIONAL SEARCH REPORT**
Information on patent family members

International application No.

**PCT/CN2024/108401**

| Patent document cited in search report | | | Publication date (day/month/year) | Patent family member(s) | | | Publication date (day/month/year) |
|---|---|---|---|---|---|---|---|
| CN | 117237573 | A | 15 December 2023 | HK | 40098537 | A0 | 05 April 2024 |
| CN | 116416358 | A | 11 July 2023 | | None | | |
| CN | 110738723 | A | 31 January 2020 | | None | | |
| CN | 113592997 | A | 02 November 2021 | HK | 40054542 | A0 | 25 February 2022 |
| CN | 116485983 | A | 25 July 2023 | | None | | |
| KR | 102537808 | B1 | 31 May 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112437155